# EUROPEAN PATENT APPLICATION

(11) **EP 2 945 447 A1**
(43) Date of publication of application: **18.11.2015**
(21) Application number: 14738318.6
(22) Date of filing: 06.01.2014
(51) Int. Cl.: H04W 72/04, H04W 16/14, H04W 16/32

(54) **TERMINAL DEVICE AND BASE STATION DEVICE**

(30) Priority: 09.01.2013 JP 2013001524
(71) Applicant: Sharp Kabushiki Kaisha, Osaka-shi, Osaka 545-8522 (JP)
(72) Inventor: KUSASHIMA Naoki, Osaka 545-8522 (JP); SHIMEZAWA, Kazuyuki, Osaka 545-8522 (JP); NOGAMI, Toshizo, Osaka 545-8522 (JP); IMAMURA, Kimihiko, Osaka 545-8522 (JP)
(74) Representative: Müller Hoffmann & Partner
(86) International application number: PCT/JP2014/050036
(87) International publication number: WO 2014/109302

(57) **Abstract**

To reduce inter-cell interference in a communication system in which a base station and a terminal communicate with each other. The base station supplies uplink transmission restriction subframe configuration information indicating subframes in which the transmission of an uplink signal is restricted to the terminal. As a result of the base station setting the uplink transmission restriction subframe configuration information, the terminal restricts the transmission of an uplink signal in an uplink transmission restriction subframe which is an uplink subframe and which is a subframe indicated by the uplink transmission restriction subframe configuration information. In the uplink transmission restriction subframe, the terminal performs an operation for not transmitting an uplink signal, an operation for delaying the transmission of an uplink signal, an operation for transmitting the uplink signal which does not include a specific uplink physical channel, or an operation for transmitting the uplink signal which does not include physical channels other than a specific uplink physical channel.

## Description

### TECHNICAL FIELD

The present invention relates to a terminal device and a base station device.

### BACKGROUND ART

In communication systems, such as WCDMA (registered) (Wideband Code Division Multiple Access), LTE (Long Term Evolution), and LTE-A (LTE-Advanced) standardized by 3GPP (Third Generation Partnership Project), and Wireless LAN and WiMAX (Worldwide Interoperability for Microwave Access) standardized by IEEE (The Institute of Electrical and Electronics engineers), a base station (base station device, cell, transmitting station, transmitting device, or eNodeB) and a terminal (terminal device, mobile terminal, receiving station, mobile station, receiving device, or UE (User Equipment)) each include a plurality of transmit antennas and receive antennas, and conduct spatial multiplexing on a data signal by using the MIMO (Multi Input Multi Output) technology, thereby implementing fast data communication.

In LTE, as the downlink communication method, the OFDM (Orthogonal Frequency Division Multiplexing) scheme is employed, and as the uplink communication method, the SC-FDMA (Single-Carrier Frequency Division Multiple Access) scheme is employed.

In this type of communication system, a base station transmits downlink data (transport block for a downlink shared channel (DL-SCH)) to a terminal. The downlink data is mapped onto a downlink data channel (PDSCH; Physical Downlink Shared Channel).

In this type of communication system, a terminal transmits uplink data (transport block for an uplink shared channel (UL-SCH)) to a base station. The uplink data is mapped onto an uplink data channel (PUSCH; Physical Uplink Shared Channel).

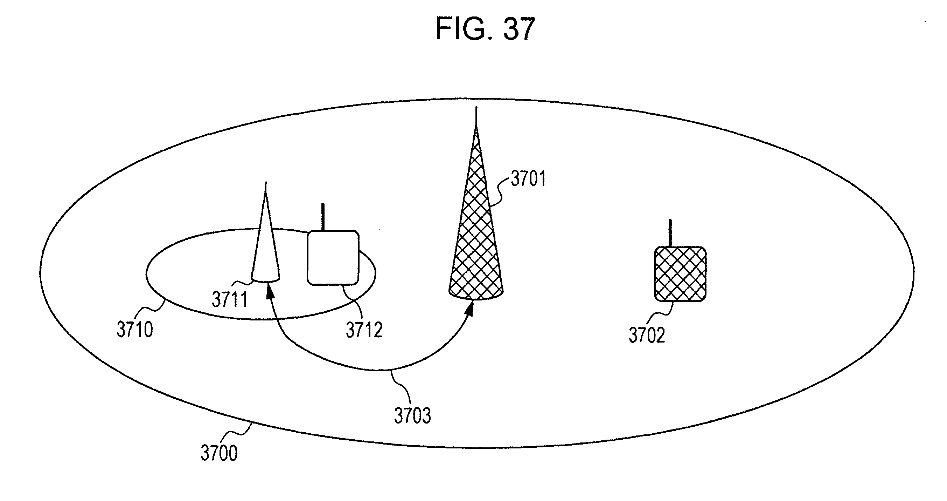

In 3GPP, a communication system using a heterogeneous network deployment (HetNet) constituted by, for example, a base station having a wider coverage and an RRH (Remote Radio Head) having a narrower coverage, is being studied. Fig. 37 is a schematic view of a communication system using a known heterogeneous network deployment. As shown in Fig. 37, a heterogeneous network is constituted by, for example, a base station 3701 and an RRH 3711.

In Fig. 37, the base station 3701 constructs a cell 3700, while the RRH 3711 constructs a cell 3710. The base station 3701 is connected to the RRH 3711 via a network 3703. With this configuration, the base station 3701 is able to transmit and receive a data signal and a control signal (control information) to and from the RRH 3711 via the network 3703. For the backhaul network 3703, a wired network, such as an optical fiber, or a wireless network using a relay technology is used. In this case, the base station 3701 and the RRH 3711 entirely or partially utilize the same resources, so that the overall frequency efficiency (transmission capacity) within the area of the cell 3700 can be improved.

If a terminal 3712 is located within the cell 3710, it is able to perform single cell communication with the RRH 3711. If the terminal 3712 is located near an edge of the cell 3710 (cell edge), the RRH 3711 or the terminal 3712 is required to take certain measures against the interference from the base station 3701 caused by a channel using the same resource. As multi-cell communication (coordinated communication) between the base station 3701 and the RRH 3711, inter-base-station coordinated communication in which adjacent cells perform coordinated communication may be performed, and a method for reducing or suppressing the interference which may influence the terminal 3712 located at the cell edge by performing such inter-base-station coordinated communication is being considered. As the method for reducing or suppressing the interference by performing inter-base-station coordinated communication, the ICIC (Inter-Cell Interference Coordination) and CoMP (Cooperative Multipoint) transmission schemes, for example, are being considered.

LTE supports both of the FDD (Frequency Division Duplex) scheme and the TDD (Time Division Duplex) scheme. LTE employing the TDD scheme is also called TD-LTE or LTE TDD. The FDD scheme is a technology for performing multiplexing by using different frequencies in a band used for uplink communication and a band used for downlink communication. The TDD scheme is a technology for performing time-division multiplexing for uplink signals and downlink signals. In the TDD scheme, full duplex communication is implemented in a single frequency band.

Traffic adaptation is a technology for dynamically changing the ratio between the resources for uplink communication and the resources for downlink communication in accordance with the traffic in uplink communication and the traffic in downlink communication. In 3GPP, the application of this traffic adaptation technology to TD-LTE is being considered. The traffic (the volume of data communication) is not always the same, but varies in accordance with requests from users. Moreover, the traffic in uplink communication and the traffic in downlink communication are not always the same, and there may be a situation where the traffic in downlink communication is greater than that in uplink communication depending on a request, and vice versa. If the radio resources are appropriately changed in accordance with the traffic, the packet throughput in a communication system can be significantly improved. This is called the traffic adaptation technology (NPL 1).

### CITATION LIST

### [Non-Patent Document]

[Non-Patent Document 1] 3rd Generation Partnership Project; Technical Specification Group Radio Access Network; Evolved Universal Terrestrial Radio Access (E-UTRA); Further enhancement to LTE Time Division Duplexx (TDD) for Downlink-Uplink (DL-UL) interference management and traffic adaptation (Release 11), June 2012, 3GPP TR 36. 828 V11.0.0 (2012-06)

### DISCLOSURE OF THE INVENTION

### Problems to be Solved by the Invention

However, in the FDD scheme or the TDD scheme, there is a problem of inter-cell interference in which communication of one cell adversely influences communication of an adjacent cell. For solving this problem, it is necessary to introduce interference mitigation techniques for suppressing inter-cell interference (interference mitigation, interference cancellation, and interference suppression).

The present invention has been made in view of the above-described problem. It is an object of the present invention to provide, in a communication system in which a base station and a terminal communicate with each other, a terminal device and a base station device which are capable of suppressing inter-cell interference.

### Means for Solving the Problems

(1) The present invention has been made for solving the above-described problem. As a result of a base station setting restriction information indicating subframes in which the transmission of an uplink signal is restricted, a terminal according to an aspect of the present invention restricts the transmission of an uplink signal in a subframe which is an uplink subframe and which is a subframe indicated by the restriction information.
(2) A terminal according to an aspect of the present invention is the above-described terminal. Uplink-downlink configuration information is set by the base station. Uplink subframes are set by using the uplink-downlink configuration information.
(3) A terminal according to an aspect of the present invention is the above-described terminal. The uplink-downlink configuration information is broadcast by the base station.
(4) A terminal according to an aspect of the present invention is the above-described terminal. The uplink-downlink configuration information is individually supplied from the base station.
(5) A terminal according to an aspect of the present invention is the above-described terminal. The terminal does not transmit an uplink signal in a subframe which is an uplink subframe and which is a subframe indicated by the restriction information.
(6) A terminal according to an aspect of the present invention is the above-described terminal. The terminal delays the transmission of an uplink signal in a subframe which is an uplink subframe and which is a subframe indicated by the restriction information.
(7) A terminal according to an aspect of the present invention is the above-described terminal. The terminal transmits an uplink signal which does not include a specific uplink physical channel, in a subframe which is an uplink subframe and which is a subframe indicated by the restriction information.
(8) A terminal according to an aspect of the present invention is the above-described terminal. The terminal transmits an uplink signal which does not include physical channels other than a specific uplink physical channel, in a subframe which is an uplink subframe and which is a subframe indicated by the restriction information.
(9) A base station according to an aspect of the present invention supplies restriction information indicating subframes in which the transmission of an uplink signal is restricted to a terminal. The base station causes the terminal to restrict the transmission of an uplink signal in a subframe which is an uplink subframe and which is a subframe indicated by the restriction information.
(10) A base station according to an aspect of the present invention is the above-described base station. The base station sets uplink-downlink configuration information in a terminal. Uplink subframes are set by using the uplink-downlink configuration information.
(11) A communication system according to an aspect of the present invention is a communication system in which a base station and a terminal communicate with each other. The base station supplies restriction information indicating subframes in which the transmission of an uplink signal is restricted to the terminal. As a result of the base station setting the restriction information indicating subframes in which the transmission of an uplink signal is restricted, the terminal restricts the transmission of an uplink signal in a subframe which is an uplink subframe and which is a subframe indicated by the restriction information.
(12) A communication method according to an aspect of the present invention is a communication method for a terminal which communicates with a base station. As a result of the base station setting restriction information indicating subframes in which the transmission of an uplink signal is restricted, the terminal restricts the transmission of an uplink signal in a subframe which is an uplink subframe and which is a subframe indicated by the restriction information.
(13) A communication method according to an aspect of the present invention is a communication method for a base station which communicates with a terminal. The base station supplies restriction information indicating subframes in which the transmission of an uplink signal is restricted to the terminal. The base station causes the terminal to restrict the transmission of an uplink signal in a subframe which is an uplink subframe and which is a subframe indicated by the restriction information.
(14) An integrated circuit according to an aspect of the present invention is an integrated circuit implemented in a terminal which communicates with a base station. The terminal implements a function of restricting, as a result of the base station setting restriction information indicating subframes in which the transmission of an uplink signal is restricted, the transmission of an uplink signal in a subframe which is an uplink subframe and which is a subframe indicated by the restriction information.
(15) An integrated circuit according to an aspect of the present invention is an integrated circuit implemented in a base station which communicates with a terminal. The base station implements a function of supplying restriction information indicating subframes in which the transmission of an uplink signal is restricted to a terminal and causing the terminal to restrict the transmission of an uplink signal in a subframe which is an uplink subframe and which is a subframe indicated by the restriction information.

### Effects of the Invention

According to this invention, it is possible to suppress inter-cell interference in a communication system in which a base station and a terminal communicate with each other.

### BRIEF DESCRIPTION OF THE DRAWINGS

Fig. 1 is a schematic view of a communication system according to a first embodiment of the present invention.
Fig. 2 is a schematic view of a radio frame used in the TDD scheme according to the first embodiment of the present invention.
Fig. 3 illustrates a table of the configurations of radio frames in association with uplink-downlink configuration information according to the first embodiment of the present invention.
Fig. 4 is a schematic block diagram illustrating the configuration of a terminal which is performing uplink communication according to the first embodiment of the present invention.
Fig. 5 is a schematic block diagram illustrating the configuration of a base station which is performing uplink communication according to the first embodiment of the present invention.
Fig. 6 is a schematic block diagram illustrating the configuration of a base station which is performing downlink communication according to the first embodiment of the present invention.
Fig. 7 is a schematic block diagram illustrating the configuration of a terminal which is performing downlink communication according to the first embodiment of the present invention.
Fig. 8 illustrates an example of the configuration of a radio frame including flexible subframes according to the first embodiment of the present invention.
Fig. 9 illustrates an example 1 of the association between a radio frame configuration and a bitmap according to the first embodiment of the present invention.
Fig. 10 illustrates an example 2 of the association between a radio frame configuration and a bitmap according to the first embodiment of the present invention.
Fig. 11 schematically illustrates a first processing method to be employed when a resource for an uplink signal is allocated to an uplink transmission restriction subframe according to the first embodiment of the present invention.
Fig. 12 schematically illustrates a second uplink signal processing method to be employed when a resource for an uplink signal is allocated to an uplink transmission restriction subframe according to the first embodiment of the present invention.
Fig. 13 schematically illustrates a third uplink signal processing method to be employed when a resource for an uplink signal is allocated to an uplink transmission restriction subframe according to the first embodiment of the present invention.
Fig. 14 schematically illustrates a fourth uplink signal processing method to be employed when a resource for an uplink signal is allocated to an uplink transmission restriction subframe according to the first embodiment of the present invention.
Fig. 15 illustrates an example of the configuration of an uplink signal that does not cause interference which influences a downlink signal in the fourth uplink signal processing method according to the first embodiment of the present invention.
Fig. 16 is a flowchart for determining an uplink signal processing method by a terminal according to the first embodiment of the present invention.
Fig. 17 illustrates a table indicating enable/disable information in accordance with the transition of the state of the uplink transmission restriction subframe configuration according to the first embodiment of the present invention.
Fig. 18 illustrates an example of radio frame configurations when an uplink transmission restriction subframe is periodically set according to a second embodiment of the present invention.
Fig. 19 illustrates an example of radio frame configurations when two uplink transmission restriction subframes are periodically set according to the second embodiment of the present invention.
Fig. 20 illustrates a table indicating the association of uplink transmission restriction subframe offset information and uplink transmission restriction subframe periodicity information with uplink transmission restriction subframe configuration information according to the second embodiment of the present invention.
Fig. 21 illustrates a table of examples of the configurations of uplink transmission restriction subframes in association with radio frame configurations including with flexible subframes according to a third embodiment of the present invention.
Fig. 22 illustrates an example of uplink transmission restriction subframe candidates when uplink-downlink configuration information concerning a reference base station is set to be 0 and uplink-downlink configuration information concerning an adjacent base station is set to be 1 according to the third embodiment of the present invention.
Fig. 23 illustrates a table of examples of the configurations of uplink transmission restriction subframes in association with uplink-downlink configuration information concerning an adjacent base station when uplink-downlink configuration information concerning a reference base station is set to be 0 according to the third embodiment of the present invention.
Fig. 24 illustrates a table of examples of the configurations of uplink transmission restriction subframes in association with uplink-downlink configuration information concerning an adjacent base station when uplink-downlink configuration information concerning a reference base station is set to be 1 according to the third embodiment of the present invention.
Fig. 25 illustrates a table of examples of the configurations of uplink transmission restriction subframes in association with uplink-downlink configuration information concerning an adjacent base station when uplink-downlink configuration information concerning a reference base station is set to be 2 according to the third embodiment of the present invention.
Fig. 26 illustrates a table of examples of the configurations of uplink transmission restriction subframes in association with uplink-downlink configuration information concerning an adjacent base station when uplink-downlink configuration information concerning a reference base station is set to be 3 according to the third embodiment of the present invention.
Fig. 27 illustrates a table of examples of the configurations of uplink transmission restriction subframes in association with uplink-downlink configuration information concerning an adjacent base station when uplink-downlink configuration information concerning a reference base station is set to be 4 according to the third embodiment of the present invention.
Fig. 28 illustrates a table of examples of the configurations of uplink transmission restriction subframes in association with uplink-downlink configuration information concerning an adjacent base station when uplink-downlink configuration information concerning a reference base station is set to be 5 according to the third embodiment of the present invention.
Fig. 29 illustrates a table of examples of the configurations of uplink transmission restriction subframes in association with uplink-downlink configuration information concerning an adjacent base station when uplink-downlink configuration information concerning a reference base station is set to be 6 according to the third embodiment of the present invention.
Fig. 30 illustrates a table of examples of the configurations of uplink transmission restriction subframes in association with uplink-downlink configuration information concerning an adjacent base station 2 when uplink-downlink configuration information concerning a reference base station is set to be 1 and uplink-downlink configuration information concerning an adjacent base station 1 is set to be 2 according to the third embodiment of the present invention.
Fig. 31 is a flowchart illustrating uplink transmission restriction subframe application decision processing performed by a terminal according to a fourth embodiment of the present invention.
Fig. 32 is a flowchart illustrating uplink transmission restriction subframe application decision processing performed by a terminal when two items of uplink transmission restriction subframe configuration information are received according to the fourth embodiment of the present invention.
Fig. 33 illustrates an example of the sending of a request to restrict the transmission of an uplink signal according to a fifth embodiment of the present invention.
Fig. 34 illustrates an association table indicating the association between downlink subframes in which an uplink grant including an uplink signal transmission restriction request is received and uplink subframes according to the fifth embodiment of the present invention.
Fig. 35 is a schematic view of a communication system in which adjacent cells are performing uplink communication according to a sixth embodiment of the present invention.
Fig. 36 is a schematic view of a communication system in which terminal-to-terminal communication is performed according to a seventh embodiment of the present invention.
Fig. 37 is a schematic view of a communication system using a known heterogeneous network deployment.

### MODE FOR CARRYING OUT THE INVENTION

The technologies described in this specification may be used in communication systems, such as the Code Division Multiple Access (CDMA) system, the Time Division Multiple Access (TDMA) system, the Frequency Division Multiple Access (FDMA) system, the Orthogonal FDMA (OFDMA) system, the Single-Carrier FDMA (SC-FDMA) system, the Interleave Division Multiple Access (IDMA), and other communication systems. The terms "system" and "network" may often be used synonymously. The 3rd Generation Partnership Project (3GPP) has standardized communication systems called LTE (Long Term Evolution) and LTE-A (LTE-Advanced). LTE is an UMTS using E-UTRA in which OFDMA is used on the downlink and SC-FDMA is used on the uplink. LTE-A is a system, a wireless technology, and standards, which are improved versions of LTE. The following technologies will be described, assuming that they are used in LTE and/or LTE-A, but may be applicable to another communication system. In the following description, the terms used in the LTE standards, the LTE-A standards, and 3GPP will be used.

### (First Embodiment)

A first embodiment of the present invention will be described below. A communication system of the first embodiment of the present invention includes base stations (transmitting device, transmitting point, transmit antenna set, transmit antenna port set, component carrier, eNodeB, RRH (Remote Radio Head), and distributed antenna) and terminals (terminal device, mobile terminal, receiving point, receiving terminal, receiving device, receive antenna set, receive antenna port set, and UE (User Equipment)). The base stations include cells (microcell, picocell, femtocell, small cell, coverage, component carrier, primary cell, and secondary cell). The base stations are connected to each other via a backhaul network (optical fiber, X2 interface, or relay).

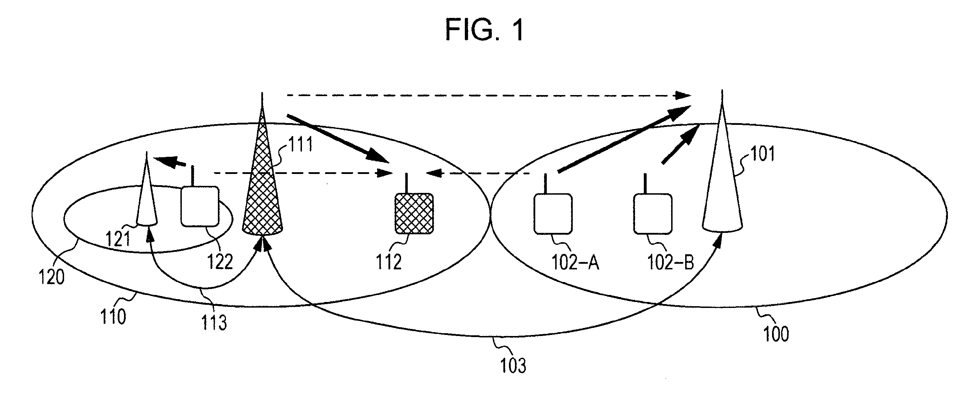

Fig. 1 is a schematic view of a communication system according to an embodiment of the present invention. In the communication system of the present invention, a base station 101 forms a cell 100, and terminals 102-A and 102-B located within the cell 100 are wirelessly connected to the base station 101. Hereinafter, the terminals 102-A and 102-B will be collectively referred to as the "terminal 102". For performing data communication with the base station 101, the terminal 102 transmits control information, a reference signal, and information data by using an uplink signal. In the communication system of the present invention, a base station 111 forms a cell 110, and a terminal 112 located within the cell 110 is wirelessly connected to the base station 111. For performing data communication with the terminal 112, the base station 111 transmits control information, a reference signal, and information data by using a downlink signal. The cells 100 and 110 are adjacent to each other. The base stations 101 and 111 are connected to each other via a backhaul network 103, and transmitting and receiving of information between the base stations is performed via the backhaul network 103. In the communication system of the present invention, an RRH 121 is disposed within the cell 110. The RRH 121 forms a cell 120 which is smaller than the cell 110. The cell 120 is included within the cell 110 and forms a heterogeneous network. The base station 111 and the RRH 121 are connected to each other via a backhaul network 113, and transmitting and receiving of information between the base station and the RRH is performed via the backhaul network 113.

The base stations and terminals according to the first embodiment of the present invention perform communication by using a component carrier. The component carrier is constituted by a plurality of resource blocks (RBs) which are contiguous in the frequency direction. The resource block is used for representing the mapping of a predetermined physical channel (such as a downlink data channel or an uplink data channel) onto resource elements. As the resource blocks (RBs), virtual resource blocks (VRBs) and physical resource blocks (PRBs) are defined. A certain physical channel is first mapped onto a virtual resource block. Then, the virtual resource block is mapped onto a physical resource block. One physical resource block is constituted by seven contiguous OFDM symbols or SC-FDMA symbols in the time domain and twelve contiguous subcarriers in the frequency domain. That is, one physical resource block is constituted by (7x 12) resource elements. One physical resource block corresponds to one slot in the time domain and to 180 kHz in the frequency domain. Numbers from 0 (resource block numbers) are assigned to physical resource blocks in the frequency domain. The number of resource blocks included in a component carrier is increased or decreased in accordance with the bandwidth of the component carrier. A physical resource block pair (RB pair) has the same resource block number and is defined by two physical resource blocks in one subframe.

LTE supports the FDD scheme and the TDD scheme. The FDD scheme is also referred to as "Frame structure type 1", while the FDD scheme is also referred to as "Frame structure type 2". In this embodiment, the use of the TDD scheme is assumed.

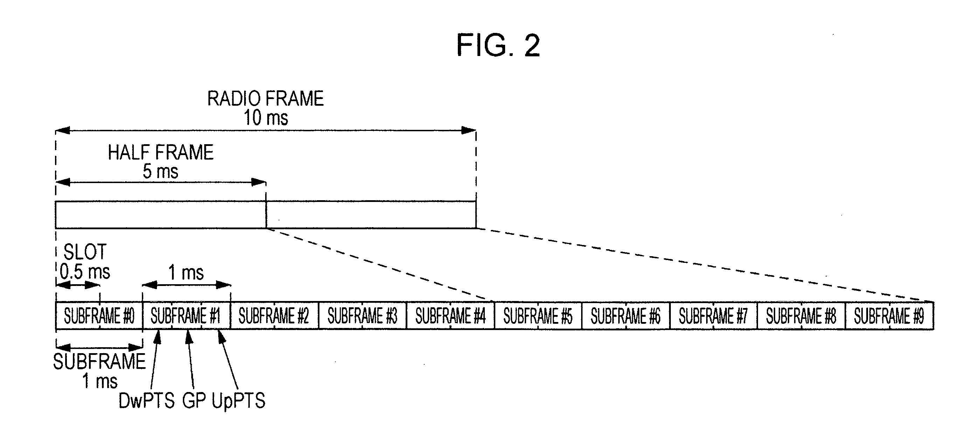

Fig. 2 illustrates the configuration of a radio frame used in the TDD scheme according to the first embodiment of the present invention. The length of each radio frame is 10 ms. Each radio frame is constituted by two half frames. The length of each half frame is 5 ms. Each half frame is constituted by five subframes. Each subframe has a 1 ms length and is defined by two contiguous slots. The i-th subframe in a radio frame is constituted by the (2xi)-th slot and (2×i+1)-th slot. That is, in each 10-ms interval, ten subframes can be used. The length of each slot is 0.5 ms. Two resource blocks in each subframe are also called a resource block pair. Sub frame numbers 0 to 9 are sequentially assigned to the above-described ten subframes. Hereinafter, when a specific subframe is specified, it is expressed by a subframe number n (n is one of 0 to 9) and a radio frame number m. Alternatively, a specific subframe is expressed by one subframe number (10×m+n) with a combination of a subframe number n (n is one of 0 to 9) and a radio frame number m.

In LTE, three types of subframes, that is, uplink subframes, downlink subframes, and special subframes, are used.

The uplink subframe is a subframe provided for performing uplink radio communication (uplink communication). The uplink subframe is used for transmitting an uplink physical channel and an uplink reference signal by a terminal. The uplink physical channel is used for transmitting information output from a higher layer. As the uplink reference signal, a signal known to a base station is transmitted, and the uplink reference signal is used mainly for estimating the channel and measuring the channel state.

In uplink communication, uplink physical channels, such as an uplink data channel (uplink shared channels, PUSCH; Physical Uplink Shared Channel), an uplink control channel (PUCCH; Physical Uplink Control Channel), and a random access channel (PRACH; Physical Random Access Channel), are used.

In uplink communication, uplink reference signals, such as an uplink terminal specific reference signal (Uplink DM-RS; Demodulation-Reference signal) and a sounding reference signal (SRS), are used.

The downlink subframe is a subframe provided for performing downlink radio communication (downlink communication). The downlink subframe is used for transmitting a downlink physical channel and a downlink reference signal by a base station. The downlink physical channel is used for transmitting information output from a higher layer. As the downlink reference signal, a signal known to a terminal is transmitted, and the downlink reference signal is used mainly for estimating the channel and measuring the channel state.

In downlink communication, downlink physical channels, such as a downlink data channel (downlink shared channel, PDSCH; Physical Downlink Shared Channel), a downlink control channel (PDCCH; Physical Downlink Control Channel), an enhanced downlink control channel (ePDCCH; enhanced Physical Downlink Control Channel), a control format indicator channel (PCFICH; Physical Control Format Indicator Channel), an HARQ indicator channel (PHICH; Physical Hybrid automatic repeat Indicator Channel), and a broadcast channel (PBCH; Physical Broadcast Channel), are used.

In downlink communication, downlink reference signals, such as a cell-specific reference signal (CRS), a downlink terminal specific reference signal (Downlink DM-RS; Demodulation-Reference Signal, UE-specific RS), an enhanced downlink control channel demodulation reference signal, and a channel state information reference signal (CSI-RS), are used.

The cell-specific reference signal is associated with some or all of antenna ports 0 to 3. The downlink terminal specific reference signal is associated with some or all of antenna ports 7 to 14. The enhanced downlink control channel demodulation reference signal is associated with some or all of antenna ports 107 to 114. The channel state information reference signal is associated with some or all of antenna ports 15 to 22. The downlink control channel is transmitted by using some or all of antenna ports 0 to 3. Accordingly, a terminal is able to demodulate or detect the downlink control channel by using the cell-specific reference signal. The enhanced downlink control channel is transmitted by using some or all of antenna ports 107 to 114. Accordingly, a terminal is able to demodulate or detect the enhanced downlink control channel by using the enhanced downlink control channel demodulation reference signal. The downlink data channel is transmitted by using some or all of antenna ports 7 to 14. Accordingly, a terminal is able to demodulate the downlink data channel by using the downlink terminal specific reference signal.

The special subframe is constituted by DwPTS (Downlink Pilot Time Slot), UpPTS (Uplink Pilot Time Slot), and GP (Guard Period). DwPTS is provided for performing downlink communication. DwPTS is used for transmitting an HARQ indicator channel, a control format indicator channel, a downlink control channel, a downlink data channel, and so on. UpPTS is provided for performing uplink communication. UpPTS is used for transmitting a sounding reference signal and a random access channel. During GP, neither of downlink transmission nor uplink transmission is performed. GP is provided for avoiding the interference between a downlink signal and an uplink signal. The total length of DwPTS, GP, and UpPTS is 1 ms.

The configuration of a radio frame in the TDD scheme in which uplink subframes, downlink subframes, and special subframes are disposed will be described below.

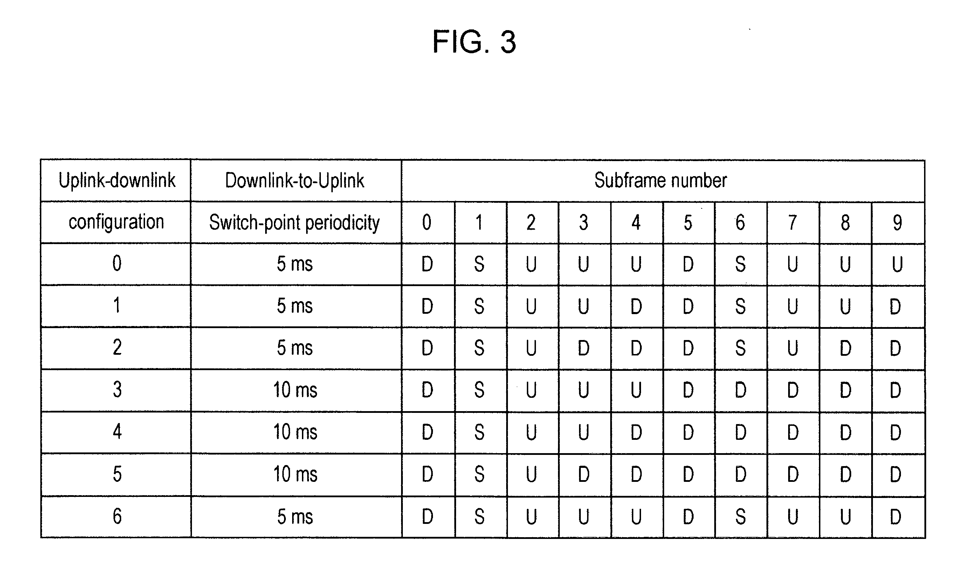

In the TDD scheme, the ratio between uplink communication resources and downlink communication resources (resource allocation and the radio frame configuration) can be set according to the environment of a communication system. Fig. 3 illustrates the configurations of radio frames in association with uplink-downlink configuration information according to an embodiment of the present invention. "D" indicates a downlink subframe, "U" indicates an uplink subframe, and "S" indicates a special subframe. The numbers of uplink subframes and downlink subframes and the positions of subframes differ in accordance with the uplink-downlink configuration information (uplink/downlink configuration information). That is, in the TDD scheme, uplink subframes, downlink subframes, and special subframes are set by the uplink-downlink configuration information. When uplink-downlink configuration information is one of 0 to 2 and 6, the switch-point periodicity for switching between downlink communication and uplink communication is 5 ms. When uplink-downlink configuration information is one of 3 to 5, the switch-point periodicity for switching between downlink communication and uplink communication is 10 ms. A communication system or a base station sets uplink-downlink configuration information so as to determine the ratio between uplink communication resources and downlink communication resources used in the communication system.

The uplink physical channels and uplink reference signals will be described below.

The uplink data channel is a physical channel used for transmitting uplink information data (uplink shared data, UL-SCH; Uplink-Shared Channel). The uplink data channel may be used for transmitting, together with uplink information data, ACK (acknowledgement)/NACK (negative-acknowledgement) for a downlink data channel and/or downlink channel state information. Alternatively, the uplink data channel may be used only for transmitting ACK/NACK and/or channel state information.

LTE supports HARQ (Hybrid Automatic Repeat reQuest) as an error correcting method for an uplink data channel and a downlink data channel. There are two types of HARQ, that is, synchronous HARQ and asynchronous HARQ. In synchronous HARQ, when conducting retransmission, an HARQ process which performs HARQ processing and a transmission subframe are associated with each other. Accordingly, retransmission data is uniquely determined from a transmission subframe, and a base station or a terminal does not have to explicitly supply information concerning the retransmission data. The time interval from the previous transmission to the subsequent transmission is called HARQ RTT (Round Trip Time). In contrast, in asynchronous HARQ, it is not necessary to associate an HARQ process with a transmission subframe. A transmission subframe used for retransmission can be set as desired by a base station or a terminal, and thus, retransmission data can be transmitted by using a subframe having a good channel state between the base station and the terminal. The uplink data channel can support synchronous HARQ.

The uplink control channel is a physical channel used for transmitting uplink control information (UCI). The uplink control information includes ACK/NACK indicating whether or not the demodulation of a downlink data channel has succeeded, a scheduling request (SR) for the resources of an uplink data channel, downlink channel state information (CSI).

A plurality of formats are defined for the uplink control channel. The format of the uplink control channel is also called the PUCCH format. The configuration of a PUCCH signal and the type of data included in the PUCCH signal are defined individually by the PUCCH format. For example, PUCCH format 1 is used for supplying information indicating whether or not the demodulation of a downlink data channel has succeeded. For example, PUCCH format 2 is used for supplying channel state information concerning downlink communication.

The random access channel is a physical channel used for transmitting a random access preamble. The random access channel is used for an initial connection establishment procedure, a handover procedure, a connection reestablishment procedure, uplink transmission synchronization (timing adjustment), and a request for the resources of an uplink data channel.

The uplink terminal specific reference signal is transmitted for conducting channel correction for an uplink data channel or an uplink control channel. The uplink terminal specific reference signal is first included in the resources assigned to the uplink data channel and is then transmitted. Similarly, the uplink terminal specific reference signal is first included in the resources assigned to the uplink control channel and is then transmitted.

The sounding reference signal is transmitted for the purposes, such as the measurement of the uplink channel state. A terminal device regularly transmits a first sounding reference signal. The first sounding reference signal is also called a periodic sounding reference signal (periodic SRS). If the terminal device receives information indicating a request for a sounding reference signal, it transmits a second sounding reference signal one time. The second sounding reference signal is also called an aperiodic sounding reference signal (aperiodic SRS).

The downlink physical channels and downlink reference signals will be described below.

The downlink data channel is a physical channel used for transmitting downlink information data (downlink shared data, DL-SCH; Downlink-Shared Channel). The downlink data channel is mapped onto resource elements defined as a downlink data channel area within a channel region shared by a plurality of terminals.

The downlink control channel and the enhanced downlink control channel are physical channels used for transmitting downlink control information (DCI). The downlink control information includes a downlink grant (downlink assignment) and an uplink grant (uplink assignment). The downlink grant is downlink control information used for performing scheduling for a single downlink data channel within a single cell. The uplink grant is used for performing scheduling for a single uplink data channel within a single cell. Hereinafter, the downlink control channel will also be called a first downlink control channel, and the enhanced downlink control channel will also be called a second downlink control channel.

The downlink control channel is assigned to resource elements defined as a downlink control channel area and is then transmitted. The enhanced downlink control channel is assigned to resource elements defined as an enhanced downlink control channel area and is then transmitted.

A plurality of formats are defined for downlink control information transmitted in the downlink control channel or the enhanced downlink control channel. The format of the downlink control information is also called the DCI format. That is, in the DCI format, a field corresponding to each item of downlink control information is defined.

Control information supplied in the downlink control channel or the enhanced downlink control channel is also called PDCCH signaling.

As the DCI formats for the downlink, for example, DCI format 1 and DCI format 1A used for performing scheduling (resource allocation) for one downlink data channel (transmission of a code word of one downlink data channel and one downlink transport block) within one cell are defined. That is, the DCI format 1 and DCI format 1 A are used for transmission in a downlink data channel by using one transmit antenna port. The DCI format 1 and DCI format 1 A are also used for transmission in a downlink data channel by using a plurality of transmit antenna ports according to the transmission diversity (TxD) technique.

As the DCI formats for the downlink, DCI format 2, DCI format 2A, DCI format 2B, DCI format 2C, and DCI format 2D used for performing scheduling for one downlink data channel (transmission of a code word of one or two downlink data channels and one or two downlink transports) within one cell are defined. That is, the DCI format 2, DCI format 2A, DCI format 2B, DCI format 2C, and DCI format 2D are used for transmission in a downlink data channel by using a plurality of transmit antenna ports according to the MIMO SDM (Multiple Input Multiple Output Spatial Domain Multiplexing) scheme.

The control format indicator channel is a physical channel for transmitting information concerning a downlink control channel area which is reserved for transmitting a downlink control channel. More specifically, the control format indicator channel is used for supplying information concerning a downlink control channel area as the number of head OFDM symbols to a terminal.

The HARQ indicator channel is a physical channel for reporting ACK/NACK for a predetermined uplink data channel transmitted from a terminal.

The broadcast channel is a physical channel for broadcasting master information (MI) and system information ((SI) broadcast information) shared by terminals. The system information may be first included in a downlink data channel and be then broadcast.

The cell-specific reference signal may be used for the purposes, such as the measurement of the downlink radio environment, symbol synchronization for a downlink reception signal, demodulation of a signal which is not subjected to precoding, demodulation of a signal subjected to precoding, demodulation of a downlink data channel in a predetermined transmission mode, and demodulation of a downlink control channel. As the cell-specific reference signal, a desired signal (sequence) may be used as long as it is a signal known to both of a base station and a terminal communicating with the base station. For example, random numbers or a pseudo noise sequence based on preassigned parameters, such as a number (cell ID) specific to the base station, may be used. For implementing the orthogonality between antenna ports, resource elements onto which a cell-specific reference signal associated with one antenna port is mapped and resource elements onto which a cell-specific reference signal associated with another antenna port is mapped may be nullified (zero), or code division multiplexing using a pseudo noise sequence may be performed. Alternatively, combination of these techniques may be used. The cell-specific reference signal does not necessarily have to be multiplexed on all subframes, but may be multiplexed on some subframes. The cell-specific reference signal is transmitted by using some or all of antenna ports 0 to 3.

The downlink terminal specific reference signal may be used for demodulating a downlink data channel. The downlink terminal specific reference signal is associated with a downlink data channel. As the downlink terminal specific reference signal, a signal known to both of a base station which transmits the downlink terminal specific reference signal and a terminal communicating with this base station is used. If the base station performs precoding on a downlink data channel, when demodulating the downlink data channel, the terminal is able to estimate the channel state on the downlink between the base station and the terminal and the precoding-weighted equalized channel by using the downlink terminal specific reference signal. That is, the terminal is able to demodulate the signal subjected to precoding without the base station having to report the precoding weight to the terminal.

As part of the downlink terminal specific reference signal, a signal known to both of a base station and a terminal is generated on the basis of the initial value of an input scramble code. The downlink terminal specific reference signal is set on the basis of a downlink data channel associated with the downlink terminal specific reference signal, and is transmitted in an antenna port (layer) corresponding to the downlink data channel. It is preferable that the downlink terminal specific reference signal associated with one antenna port is orthogonal and/or quasi-orthogonal to that associated with another antenna port. The downlink terminal specific reference signal is transmitted by using some or all of antenna ports 7 to 14. The downlink terminal specific reference signal is a reference effective for demodulating a downlink data channel, and is transmitted in a resource block pair or a resource block onto which the corresponding downlink data channel is mapped.

The enhanced downlink control channel demodulation reference signal may be used for demodulating an enhanced downlink control channel. The enhanced downlink control channel demodulation reference signal is associated with an enhanced downlink control channel. As the enhanced downlink control channel demodulation reference signal, a signal known to both of a base station which transmits the enhanced downlink control channel demodulation reference signal and a terminal communicating with this base station is used. If the base station performs precoding on an enhanced downlink control channel, when demodulating the enhanced downlink control channel, the terminal is able to estimate the channel state on the downlink between the base station and the terminal and the precoding-weighted equalized channel by using the enhanced downlink control channel demodulation reference signal. That is, the terminal is able to demodulate the signal subjected to precoding without the base station having to report the precoding weight to the terminal.

As part of the enhanced downlink control channel demodulation reference signal, a signal known to both of a base station and a terminal is generated on the basis of the initial value of an input scramble code. The enhanced downlink control channel demodulation reference signal is set on the basis of an enhanced downlink control channel associated with the enhanced downlink control channel demodulation reference signal, and is transmitted in an antenna port (layer) corresponding to the enhanced downlink control channel. It is preferable that an enhanced downlink control channel demodulation reference signal associated with one antenna port is orthogonal and/or quasi-orthogonal to that associated with another antenna port. The enhanced downlink control channel demodulation reference signal is transmitted by using some or all of antenna ports 107 to 114. The enhanced downlink control channel demodulation reference signal is a reference effective for demodulating an enhanced downlink control channel, and is transmitted in an RB pair or an RB onto which the corresponding downlink data channel is mapped.

The channel state information reference signal is used for the purposes, such as the measurement of the downlink radio environment (channel state), symbol synchronization for a downlink reception signal, and demodulation of a signal which is not subjected to precoding. As the channel state information reference signal, a desired signal (sequence) may be used as long as it is a signal known to both of a base station and a terminal communicating with the base station. There are two types of channel state information reference signals, that is, a non-zero-power channel state information reference signal in which a reference signal is transmitted from a base station and a zero-power channel state information reference signal in which a reference signal is not transmitted from a base station.

In 3GPP, a new carrier configuration (NCT; New Carrier Type) different from the above-described component carrier configuration has been proposed. In the new carrier configuration, for example, the above-described cell-specific reference signal or a synchronization signal (SS) used for cell detection or frame synchronization may not be mapped. Instead, in NCT, a detection reference signal (DRS; Detection RS) or eSS (enhanced SS) for enabling a terminal to perform NCT detection, symbol detection, frequency synchronization, and/or time synchronization may be mapped.

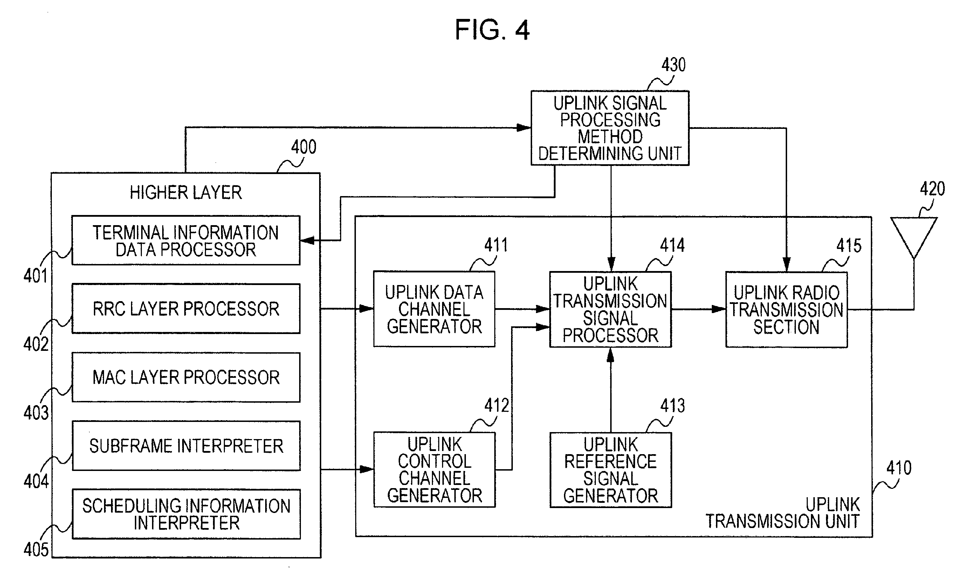

Fig. 4 is a schematic block diagram illustrating the configuration of a terminal which is performing uplink communication according to an embodiment of the present invention. By referring to Fig. 4, communication between the base station 101 and the terminal 102 will be described as an example. However, a configuration similar to that of the terminal 102 of this embodiment is also provided for the terminals 112 and 122 and terminals 3502, 3512, and 3602.

In Fig. 4, the terminal 102 includes a higher layer 400, an uplink transmission unit 410, a terminal transmit antenna unit 420, and an uplink signal processing method determining unit 430. The terminal 102 also includes a terminal control unit that can control various processing operations in the terminal 102, though such a terminal control unit is not shown.

The higher layer 400 performs various processing operations for data related to communication. The higher layer 400 includes a terminal information data processor 401, an RRC layer processor 402, a MAC layer processor 403, a subframe interpreter 404, and a scheduling information interpreter 405.

The terminal information data processor 401 generates uplink information data and/or uplink control information data for the base station. The uplink information data may be used as a base unit for performing error correction coding. The uplink information data may also be used as a base unit for performing retransmission control, such as HARQ. The terminal 102 is able to transmit a plurality of items of uplink information data to the base station which communicates with the terminal 102.

The terminal information data processor 401 also converts downlink reception data transmitted from the base station into downlink information data and/or downlink control information. The downlink information data may be used as a base unit for performing error correction coding. The downlink information data may also be used as a base unit for performing retransmission control, such as HARQ. The terminal 102 is able to receive a plurality of items of downlink information data from the base station which communicates with the terminal 102.

The higher layer 400 also includes the RRC layer processor 402. The base station 101 and the terminal 102 transmit and receive signals in the higher layer. For example, the base station 101 and the terminal 102 transmit and receive a radio resource control signal (also called RRC signaling, RRC message; Radio Resource Control message, and RRC information; Radio Resource Control information) in the RRC layer (layer 3). A signal specially transmitted to a predetermined terminal from the base station 101 in the RRC layer is also called a dedicated signal. That is, the configuration (information) reported from the base station 101 to a predetermined terminal by using a dedicated signal is a specific (unique or individual) configuration for the predetermined terminal. The system information to be set by a plurality of terminals may also be supplied by using RRC signaling.

The higher layer 400 also includes the MAC layer processor 403. In the MAC (Mediam Access Control) layer (layer 2), the base station 101 and the terminal 102 transmit and receive a MAC control element. The RRC signaling and/or MAC control element are also called higher-layer signals (Higher layer signaling).

The higher layer 400 also includes the subframe interpreter 404. The subframe interpreter 404 identifies the configuration of a radio frame including uplink subframes, downlink subframes, and/or special subframes from uplink-downlink configuration information received from the base station 101. The subframe interpreter 404 also identifies DwPTS, UpPTS, and GP from special-subframe configuration information received from the base station 101. The subframe interpreter 404 controls uplink transmission processing and downlink reception processing on the basis of the received uplink-downlink configuration information and special-subframe configuration information. In a subframe identified as an uplink subframe, the terminal does not perform downlink reception processing, but performs uplink transmission processing. In a subframe identified as a downlink subframe, the terminal does not perform uplink transmission processing, but performs downlink reception processing. In a subframe identified as a special subframe, the terminal identifies DwPTS, UpPTS, and GP from this special subframe. During the time identified as DwPTS, the terminal does not perform uplink transmission processing, but performs downlink reception processing. During the time identified as UpPTS, the terminal does not perform downlink reception processing, but performs uplink transmission processing. During the time identified as GP, the terminal performs neither of uplink transmission processing nor downlink reception processing.

The higher layer 400 also includes the scheduling information interpreter 405. The scheduling information interpreter 405 generates control information for controlling uplink transmission processing, on the basis of scheduling information indicating uplink communication scheduling received from the base station 101. The higher layer 400 generates uplink information data by using the terminal information data processor 401 before the transmission timing based on the scheduling information arrives.

The uplink transmission unit 410 performs transmission processing for uplink transmission data input from the higher layer 400, and outputs a processed uplink radio frequency band signal to the terminal transmit antenna unit 420. The uplink transmission unit 410 includes an uplink data generator 411, an uplink control channel generator 412, an uplink reference signal generator 413, an uplink transmission signal processor 414, and an uplink radio transmission section 415.

The uplink data generator (uplink data channel area allocator, uplink data channel mapping unit, and uplink shared channel generator) 411 performs adaptive control on the uplink information data output from the higher layer 400, and generates an uplink data channel to be transmitted to the base station 101. More specifically, the uplink data channel generator 411 performs adaptive control, such as coding processing for performing error correction coding, scramble processing for applying a scramble code specific to the terminal, modulation processing for using, for example, a high-order modulation method, and layer mapping processing for performing spatial multiplexing using, for example, MIMO. The uplink data generator 411 outputs a generated uplink data channel to the uplink transmission signal generator 414.

The uplink control channel generator (uplink control channel area allocator and uplink control channel mapping unit) 412 generates an uplink control channel to be transmitted from the terminal 102 by using radio resources allocated by the base station 101, in association with the uplink control information data output from the higher layer 400. The uplink control channel generator 412 outputs the generated uplink control channel to the uplink transmission signal generator 414.

The uplink reference signal generator 413 generates an uplink reference signal. The uplink reference signal generator 413 generates a sequence found by a predetermined rule as an uplink reference signal. The uplink reference signal generator 413 outputs the generated uplink reference signal to the uplink transmission signal generator 414.

The uplink transmission signal generator 414 performs precoding processing and resource element mapping processing on the uplink data channel input from the uplink data generator 411, and/or the uplink control channel input from the uplink control channel generator 412, and/or the uplink reference signal input from the uplink reference signal generator 413. If precoding processing is used by the terminal 102, it is preferable that phase rotation and/or amplitude control be performed on the input signal as the precoding processing so that the base station 101 can efficiently receive the signal. For example, it is preferable that precoding processing be performed so that the signal-to-noise ratio (SNR; Signal to Noise Radio) of the signal received by the base station 101 can be maximized. Processing using a predetermined precoding matrix, CDD (Cyclic Delay Diversity), or transmission diversity (SFBC (Spatial Frequency Block Code), STBC (Spatial Time Block Code), and TSTD (Time Switched Transmission Diversity), FSTD (Frequency Switched Transmission Diversity)) may be performed. However, precoding processing is not restricted to these examples. If information concerning precoding processing is supplied from the base station 101, the terminal 102 is able to perform precoding processing for the base station 101. In resource element mapping processing, on the basis of the scheduling information supplied from the base station 101, the terminal 102 performs mapping (multiplexing) of the uplink data channel, the uplink control channel, and/or the uplink reference signal which are input into the uplink transmission signal processor 414 onto the associated resource elements, so as to generate an uplink transmission signal. The uplink transmission signal processor 414 outputs the uplink transmission signal subjected to precoding processing and resource element mapping processing to the uplink radio transmission section 415.

The uplink radio transmission section 415 performs radio transmission processing, such as SC-FDMA transform processing using discrete Fourier transform and inverse discrete Fourier transform, guard interval addition processing, and conversion processing from a baseband signal into a radio frequency, on the uplink transmission signal output from the uplink transmission signal processor 414 so as to generate an uplink radio frequency bandwidth signal. The uplink radio transmission section 415 outputs the generated uplink radio frequency bandwidth signal to the terminal transmit antenna unit 420.

The terminal transmit antenna unit 420 modulates the radio frequency band signal input from the uplink transmission unit 410 into a carrier, and transmits the carrier to the base station 101 from one or a plurality of transmit antennas (the number of transmit antennas is equal to the number of transmit antenna ports).

The uplink signal processing method determining unit 430 determines an uplink signal processing method, which will be discussed later, by using information input from the higher layer 400. The uplink signal processing method determining unit 430 is one of the functions for controlling the terminal, and controls the terminal information data processor 401, the uplink transmission signal processor 414, and the uplink radio transmission section 415 by using the uplink signal processing method determined by the uplink signal processing method determining unit 430. The information input from the higher layer 400 includes information indicating subframe numbers for which the transmission of an uplink signal is canceled or restricted and conditions for determining the uplink signal processing method.

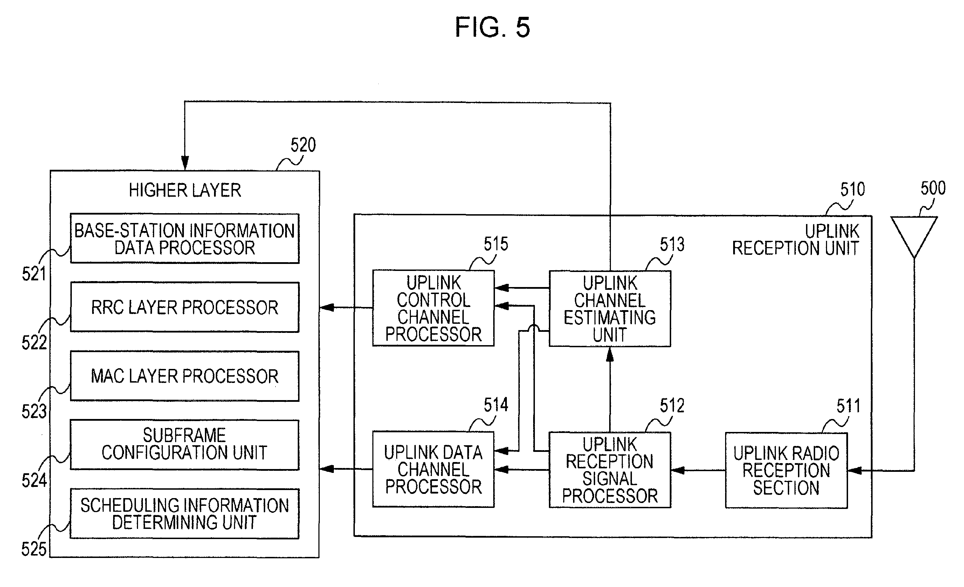

Fig. 5 is a schematic block diagram illustrating the configuration of a base station which is performing uplink communication according to an embodiment of the present invention. By referring to Fig. 5, communication between the base station 101 and the terminal 102 will be described as an example. However, a configuration similar to that of the base station 201 of this embodiment is also provided for the base station 111 and the RRH 121 and base stations 3501, 3511, and 3601.

In Fig. 5, the base station 101 includes a base-station receive antenna unit 500, an uplink reception unit 510, and a higher layer 520. The base station 101 also includes a base station control unit that can control various processing operations in the base station 101, though such a base station control unit is not shown.

The base-station receive antenna unit 500 receives a radio frequency band signal transmitted from the terminal 102 by using one or a plurality of receive antennas (the number of receive antennas is equal to the number of receive antenna ports), and outputs the radio frequency band signal to the uplink reception unit 510.

The uplink reception unit 510 performs reception processing on the uplink radio frequency band signal input from the base-station receive antenna unit 500, and outputs the processed uplink reception data to the higher layer 520. The uplink reception unit 510 includes an uplink radio reception unit 511, an uplink reception signal processor 512, a channel estimating unit 513, an uplink data processor 514, and an uplink control channel processor 515.

The uplink radio reception unit 511 receives the uplink radio frequency band signal transmitted from the terminal 102 by using the base-station receive antenna unit 500 having one or a plurality of receive antennas, and performs conversion processing from the radio frequency into the baseband signal, removing the added guard interval, and time-frequency transform processing using discrete Fourier transform, frequency domain equalization, and inverse discrete Fourier transform. The uplink radio reception unit 511 processes the uplink radio frequency band signal input from the base-station receive antenna unit 500 and outputs the processed uplink radio frequency band signal to the uplink reception signal processor 512 as an uplink reception signal.

The uplink reception signal processor 512 performs demapping (demultiplexing) of the uplink reception signal. More specifically, the uplink reception signal processor 512 performs demapping of the uplink terminal specific reference signal from the uplink reception signal and outputs the uplink terminal specific reference signal to the uplink channel estimating unit 513. The uplink reception signal processor 512 also performs demapping of the uplink data channel from the uplink reception signal and outputs the uplink data channel to the uplink data processor 514. The uplink reception signal processor 512 also performs demapping of the uplink control channel from the uplink reception signal and outputs the uplink control channel to the uplink control channel processor 515. If a plurality of terminals have performed mapping, the uplink reception signal processor 512 performs demapping for each terminal.

The uplink channel estimating unit 513 performs channel estimation for the uplink resources of the uplink control channel and/or the uplink data channel, on the basis of the uplink terminal specific reference signal. The uplink channel estimating unit 513 outputs the estimation results obtained by performing channel estimation to the uplink control channel processor 514 and/or the uplink data channel processor 515. The uplink channel estimating unit 513 estimates (performs channel estimation), for each receive antenna port associated with each transmit antenna port, amplitude and phase change (frequency response and transfer function) in each resource element, on the basis of the uplink terminal specific reference signal multiplexed on the uplink data channel and/or the uplink control channel, thereby determining the channel estimation value.

The uplink channel estimating unit 513 performs channel estimation for the sounding reference signal. The uplink channel estimating unit 513 estimates, for each terminal, amplitude and phase change in each resource element, on the basis of the sounding reference signal, and outputs the estimation results to the higher layer 520.

The uplink data channel processor 514 performs, for the data channel input from the uplink reception signal processor 512, channel compensation processing (filter processing) using the channel estimation results input from the uplink channel estimating unit 513, layer demapping processing, demodulation processing, descramble processing, and error correction decoding processing, and outputs the data channel to the higher layer 520. Concerning SC-FDMA symbols on which the uplink terminal specific reference signal is not mapped, channel estimation is conducted by performing, for example, interpolation or averaging in the time direction on such SC-FDMA symbols, on the basis of SC-FDMA symbols on which the uplink terminal specific reference signal is mapped. In channel compensation processing, channel compensation is performed on the input data channel by using the channel estimation value, thereby detecting (reconstructing) a signal for each layer based on the information data. As the signal detection method, ZF (Zero Forcing) or MMSE (Minimum Mean Square Error) equalization, turbo equalization, or interference cancellation may be used. In layer demapping processing, demapping of a signal for each layer onto the corresponding item of information data is performed. Thereafter, the processing is performed for each item of information data. In demodulation processing, demodulation is performed on the basis of the employed modulation method. In descramble processing, descramble processing is performed on the basis of the used scramble code. In decoding processing, error correction decoding processing is performed on the basis of the employed coding method.

The uplink control channel processor 515 performs, for the uplink control channel input from the uplink reception signal processor 512, channel compensation processing using the channel estimation results input from the uplink channel estimating unit 513, multiplex demapping processing, demodulation processing, and error correction decoding processing, and outputs the uplink control channel to the higher layer 520.

The higher layer 520 performs various processing operations for data related to communication. The higher layer 520 includes a base-station information data processor 521, an RRC layer processor 522, a MAC layer processor 523, a subframe configuration unit 524, and a scheduling information determining unit 525.

The base-station information data processor 521 converts the uplink reception data transmitted from the terminal into uplink information data and/or uplink control information. The uplink information data may be used as a base unit for performing error correction coding. The uplink information data may also be used as a base unit for performing retransmission control, such as HARQ. The base station 101 is able to receive a plurality of items of uplink information data from the terminal which communicates with the base station 101.

The base-station information data processor 521 also generates downlink information data and/or downlink control information data for the terminal. The downlink information data may be used as a base unit for performing error correction coding. The downlink information data may also be used as a base unit for performing retransmission control, such as HARQ. The base station 101 is able to transmit a plurality of items of downlink information data to the terminal which communicates with the base station 101.

The higher layer 520 includes the RRC layer processor 522. The base station 101 and the terminal 102 transmit and receive signals in the higher layer.

The higher layer 520 includes the MAC layer processor 523. The base station 101 and the terminal 102 transmit and receive MAC control elements in the MAC layer.

The higher layer 520 includes the subframe configuration unit 524. The subframe configuration unit 524 determines uplink-downlink configuration information to be used by the base station 101. The subframe configuration unit 524 determines uplink-downlink configuration information on the basis of the uplink communication traffic and downlink communication traffic and information concerning surrounding base stations. The base station 101 controls downlink transmission processing and uplink reception processing in accordance with the uplink-downlink configuration information determined in the subframe configuration unit 524.

The higher layer 520 includes the scheduling information determining unit 525. The scheduling information determining unit 525 determines resources of the uplink channel and resources of the downlink channel used for communication with the terminal 102 located within the cell 100. It is preferable that the scheduling information determining unit 525 determine resources used for uplink communication with the terminal 102 on the basis of the uplink channel state of the terminal which is connected to the base station 101, the communication status of the terminal which is connected to the base station 101, and scheduling information supplied from the adjacent base station 111 and RRH 121. It is also preferable that the scheduling information determining unit 525 determine resources used for downlink communication with the terminal 102 on the basis of the downlink channel state of the terminal which is connected to the base station 101, the communication status of the terminal which is connected to the base station 101, and scheduling information supplied from the adjacent base station 111 and RRH 121.

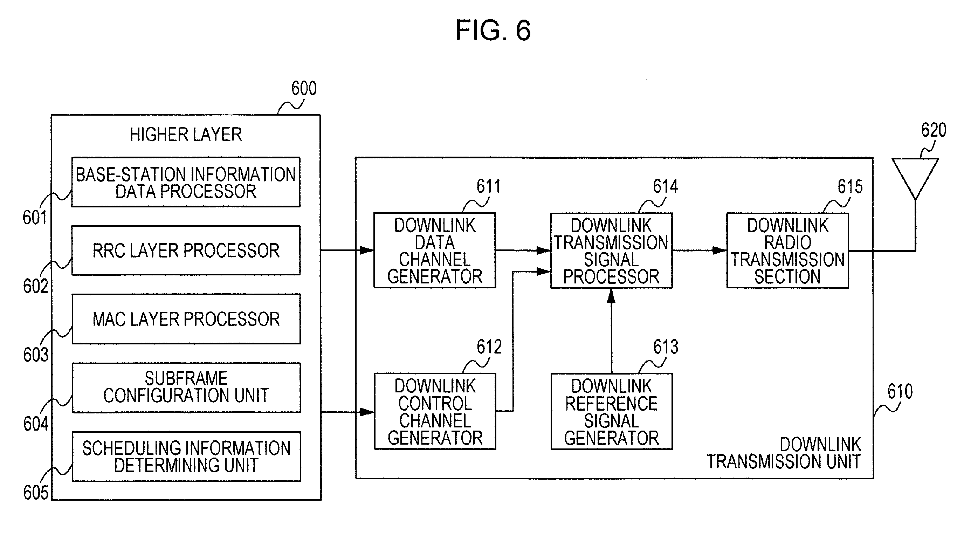

Fig. 6 is a schematic block diagram illustrating the configuration of a base station which is performing downlink communication according to an embodiment of the present invention. By referring to Fig. 6, communication between the base station 111 and the terminal 112 will be described as an example. However, a configuration similar to that of the base station 211 of this embodiment is also provided for the base station 101 and the RRH 121 and base stations 3501, 3511, and 3601.

In Fig. 6, the base station 111 includes a higher layer 600, a downlink transmission unit 610, and a base-station transmit antenna unit 620. The base station 111 also includes a base-station control unit that can control various processing operations in the base station 111, though such a base-station control unit is not shown.

The higher layer 600 performs various processing operations for data related to communication. The higher layer 600 includes a base-station information data processor 601, an RRC layer processor 602, a MAC layer processor 603, a subframe configuration unit 604, and a scheduling information determining unit 605. The higher layer 600 has functions similar to those of the higher layer 520 shown in Fig. 5.

The downlink transmission unit 610 performs transmission processing for downlink information data input from the higher layer 600, and outputs a processed downlink radio frequency band signal to the base-station transmit antenna unit 620. The downlink transmission unit 610 includes a downlink data generator 611, a downlink control channel generator 612, a downlink reference signal generator 613, a downlink transmission signal processor 614, and a downlink radio transmission section 615.

The downlink data channel generator (downlink data channel area allocator, downlink data channel mapping unit, and downlink shared channel generator) 611 performs adaptive control on the downlink information data output from the higher layer 600, and generates a downlink data channel for the terminal 112. More specifically, the downlink data channel generator 611 performs adaptive control, such as coding processing for performing error correction coding, scramble processing for applying a scramble code specific to the terminal, modulation processing for using, for example, a high-order modulation method, and layer mapping processing for performing spatial multiplexing using, for example, MIMO. In layer mapping processing performed by the downlink data channel generator 611, the information data is mapped onto one or more layers (streams) on the basis of the number of ranks set for the terminal. The downlink data generator 611 outputs the generated downlink data channel to the downlink transmission signal generator 614.

If the base station 111 transmits downlink control information to the terminal 112, the downlink control channel generator (downlink control channel area allocator and downlink control channel mapping unit) 612 generates a downlink control channel and/or an enhanced downlink control channel which will be transmitted by using a control channel area. The downlink control channel generator 612 outputs the generated downlink control channel and/or the enhanced downlink control channel to the downlink transmission signal generator 614.

The downlink reference signal generator 613 generates a downlink reference signal. The downlink reference signal generator 613 generates a sequence found by a predetermined rule as a downlink reference signal. The downlink reference signal generator 613 outputs the generated downlink reference signal to the downlink transmission signal generator 614.

The downlink transmission signal processor 614 performs precoding processing and resource element mapping processing on the downlink data channel input from the downlink data generator 611, and/or the downlink control channel and/or the enhanced downlink control channel input from the downlink control channel generator 612, and/or the downlink reference signal input from the downlink reference signal generator 613. Precoding processing is performed on the downlink data channel, downlink control channel, enhanced downlink control channel, downlink terminal specific reference signal, and/or enhanced downlink control channel demodulation reference signal. In this case, the precoding processing to be performed may be different, depending on whether the downlink terminal specific reference signal and/or enhanced downlink control channel demodulation reference signal are shared by a plurality of terminals or they are used by one terminal. If precoding processing is used by the terminal 112, it is preferable that phase rotation and/or amplitude control be performed on the input signal as precoding processing so that the terminal 112 can efficiently receive the signal. For example, it is preferable that precoding processing be performed so that power received by the terminal 112 can be maximized, the interference from an adjacent cell can be minimized, or the interference which may influence an adjacent cell can be minimized. Processing using a predetermined precoding matrix, CDD, or transmission diversity may be performed. However, precoding processing is not restricted to these examples. If the downlink terminal specific reference signal is shared by a plurality of terminals, processing using a predetermined precoding matrix, CDD, or transmission diversity is preferably performed as precoding processing. If a plurality of items of information are fed back from the terminal 112 as PMIs (Precoding Matrix Indicators), which are feedback information concerning precoding processing, the base station 111 may perform calculation, such as multiplication of the plurality of PMIs, and then perform precoding processing on the basis of the calculation results. In resource element mapping processing, on the basis of the scheduling information supplied from the higher layer 600, the base station 111 performs mapping of the downlink data channel, downlink control channel, downlink reference signal, and/or enhanced downlink control channel demodulation reference signal, which are input into the downlink transmission signal processor 614, onto the resource elements of the associated antenna ports, so as to generate a downlink transmission signal. More specifically, the downlink transmission signal processor 614 performs mapping of the downlink data channel onto a downlink data channel area of the shared channel region. The downlink transmission signal processor 614 performs mapping of the downlink control channel onto a downlink control channel area of the shared channel region. The downlink transmission signal processor 614 performs mapping of the enhanced downlink control channel onto an enhanced downlink control channel area of the shared channel region. In this case, the base station 111 may perform mapping of downlink control channels for a plurality of terminals onto downlink control channel areas. The downlink transmission signal processor 614 outputs the downlink transmission signal subjected to precoding processing and resource element mapping processing to the downlink radio transmission section 615.

The downlink radio transmission section 615 performs radio transmission processing, such as inverse fast Fourier transform (IFFT) processing, guard interval addition processing, and conversion processing from a baseband signal into a radio frequency, on the downlink transmission signal output from the downlink transmission signal processor 614, so as to generate a downlink radio frequency bandwidth signal. The downlink radio transmission section 615 outputs the generated downlink radio frequency bandwidth signal to the base-station transmit antenna unit 620.

The base-station transmit antenna unit 620 modulates the radio frequency band signal input from the downlink transmission unit 610 into a carrier, and transmits the carrier to the terminal 112 from one or a plurality of transmit antennas (the number of transmit antennas is equal to the number of transmit antenna ports). It is preferable that, as the antennas of the base-station transmit antenna unit 620, some or all of the antennas of the base-station receive antenna unit 500 shown in Fig. 5 be used.

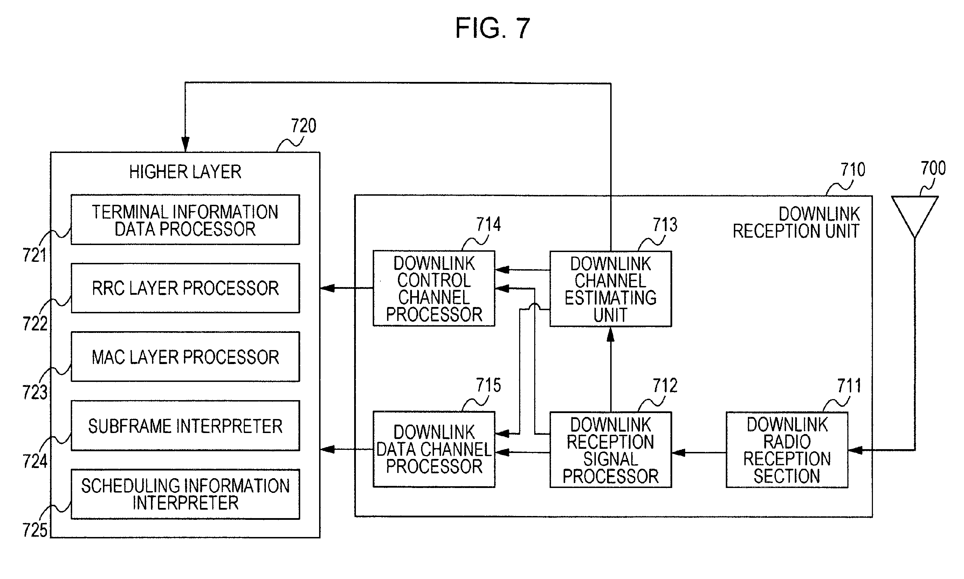

Fig. 7 is a schematic block diagram illustrating the configuration of a terminal which is performing downlink communication according to an embodiment of the present invention. By referring to Fig. 7, communication between the base station 111 and the terminal 112 will be described as an example. However, a configuration similar to that of the base station of this embodiment is also provided for the terminals 102 and 122 and terminals 3502, 3512, and 3602.

In Fig. 7, the terminal 112 includes a terminal receive antenna unit 700, a downlink reception unit 710, and a higher layer 720. The terminal 112 also includes a terminal control unit that can control various processing operations in the terminal 112, though such a terminal control unit is not shown.

The terminal receive antenna unit 700 receives a radio frequency band signal transmitted from the base station 111 by using one or a plurality of receive antennas, and outputs the radio frequency band signal to the downlink reception unit 710. It is preferable that, as the antennas of the terminal receive antenna unit 700, some or all of the antennas of the terminal transmit antenna unit 420 shown in Fig. 4 be used.

The downlink reception unit 710 performs reception processing on the downlink radio frequency band signal input from the terminal receive antenna unit 700, and outputs the processed downlink reception data to the higher layer 720. The downlink reception unit 710 includes a downlink radio reception unit 711, a downlink reception signal processor 712, a downlink channel estimating unit 713, a downlink control channel processor 714, and a downlink data channel processor 715.

The downlink radio reception unit 711 receives the downlink radio frequency band signal transmitted from the base station 111 by using the terminal receive antenna unit 700 having one or a plurality of receive antennas, and performs conversion processing from the radio frequency into the baseband signal, removing the added guard interval, and time-frequency transform processing using fast Fourier transform (FFT). The downlink radio reception unit 711 processes the downlink radio frequency band signal input from the terminal receive antenna unit 700 and outputs the processed downlink radio frequency band signal to the downlink reception signal processor 712 as a downlink reception signal.

The downlink reception signal processor 712 performs demapping (demultiplexing) of the downlink reception signal subjected to mapping processing in the base station 111. More specifically, the downlink reception signal processor 712 performs demapping of the downlink reference signal from the downlink reception signal and outputs the downlink reference signal to the downlink channel estimating unit 713. The downlink reception signal processor 712 also performs demapping of the downlink control channels mapped on the downlink control channel areas and/or the enhanced downlink control channel areas from the downlink reception signal and outputs the downlink control channels to the downlink control channel processor 714. The downlink reception signal processor 712 also performs demapping of the downlink data channel from the downlink reception signal and outputs the downlink data channel to the downlink data processor 715.

The downlink channel estimating unit 713 performs channel estimation for the downlink resources of the downlink data channel, on the basis of the downlink terminal specific reference signal. The downlink channel estimating unit 713 also performs channel estimation for the downlink resources of the downlink control channels, on the basis of the cell-specific reference signal. The downlink channel estimating unit 713 also performs channel estimation for the downlink resources of the enhanced downlink control channel, on the basis of the enhanced downlink control channel demodulation reference signal. The downlink channel estimating unit 713 outputs the estimation results obtained by performing channel estimation to the downlink control channel processor 714 and/or the downlink data channel processor 715. The downlink channel estimating unit 713 estimates, for each receive antenna port associated with each transmit antenna port, amplitude and phase change in each resource element, on the basis of the downlink terminal specific reference signal multiplexed on the downlink data channel and/or the downlink control channel, thereby determining the channel estimation value.

The downlink channel estimating unit 713 also performs channel estimation for the cell-specific reference signal and/or the channel state information reference signal. The downlink channel estimating unit 713 estimates, for each receive antenna port associated with each transmit antenna port, amplitude and phase change in each resource element, on the basis of the cell-specific reference signal and/or the channel state information reference signal, and outputs the estimation results to the higher layer 700.

The downlink control channel processor 714 searches for a downlink control channel addressed to the terminal 112 from the control channels addressed to a plurality of terminals included in the downlink control channel areas and/or enhanced downlink control channel areas input from the downlink reception signal processor 712. In this case, as the downlink control channel areas from which the downlink control channel addressed to the terminal 112 is searched, the downlink control channel processor 714 sets the downlink control channel areas and/or enhanced downlink control channel areas. The downlink control channel processor 714 searches for the downlink control channel addressed to the terminal 112 by using information specific for the terminal, for example, the terminal specific number (RNTI; Radio Network Temporary Identifier).

More specifically, the downlink control channel processor 714 conducts a sequential search by performing demodulation and decoding processing on some or all candidates of the control channel that are obtained on the basis of the type of downlink control information and the positions and sizes of the resources on which the downlink control information is mapped. As the method for determining whether or not the downlink control information is concerned with the terminal 112, the downlink control channel processor 714 uses error detection code (for example, CRC (Cyclic Redundancy Check) code) added to the downlink control information. Such a search method is also called blind decoding.

If the downlink control information concerning the terminal 112 is mapped on the detected downlink control channel, the downlink control channel processor 714 transmits the downlink control information to the higher layer 720 or the terminal control unit.

The downlink data channel processor 715 performs, for the data channel input from the downlink reception signal processor 712, channel compensation processing using the channel estimation results input from the downlink channel estimating unit 713, layer demapping processing, demodulation processing, descramble processing, and error correction decoding processing, and outputs the data channel to the higher layer 720. Concerning resource elements on which the downlink terminal specific reference signal is not mapped, channel estimation is conducted by performing, for example, interpolation or averaging in the frequency direction and in the time direction on such resource elements, on the basis of resource elements on which the downlink terminal specific reference signal is mapped. In channel compensation processing, channel compensation is performed on the input data channel by using the channel estimation value, thereby detecting a signal for each layer based on the information data. As the signal detection method, ZF or MMSE equalization, turbo equalization, or interference cancellation may be used. In layer demapping processing, demapping of a signal for each layer onto the corresponding item of information data is performed. Thereafter, the processing is performed for each item of information data. In demodulation processing, demodulation is performed on the basis of the employed modulation method. More specifically, in demodulation processing, demodulation is performed on the basis of modulation code information included in the downlink control channel obtained in the downlink control channel processor 714. In descramble processing, descramble processing is performed on the basis of the used scramble code. In decoding processing, error correction decoding processing is performed on the basis of the employed coding method. More specifically, in decoding processing, error correction decoding processing is performed on the basis of the modulation code information included in the downlink control channel obtained in the downlink control channel processor 714.

The higher layer 720 performs various processing operations for data related to communication. The higher layer 720 includes a terminal information data processor 721, an RRC layer processor 722, a MAC layer processor 723, a subframe interpreter 724, and a scheduling information interpreter 725. The higher layer 720 has functions similar to those of the higher layer 400 shown in Fig. 4.

The allocation of radio resources to uplink physical channels and uplink reference signals will be discussed below.

The radio resource to be allocated to an uplink data channel can be set independently in accordance with each of the following cases: a case in which new uplink information data is transmitted (first transmission); a case in which, when receiving information indicating "not received" from a base station in response to previously transmitted uplink information data, the previously transmitted uplink information data is transmitted again (retransmission); a case in which an uplink data channel is set by semi-persistent scheduling (SPS) and is transmitted; and a case in which an uplink data channel is set by TTI (Transmission Time Interval) bundling and is transmitted.

In the case of first transmission, an uplink data channel is transmitted in an uplink subframe, which is a frame four or more subframes subsequent to the subframe in which the terminal has received information indicating first transmission through an uplink grant transmitted in a downlink control channel. The resource block to be used for the uplink data channel is reported by the uplink grant transmitted in the downlink control channel.

In the case of retransmission, an uplink data channel is transmitted in an uplink subframe associated with an HARQ process after the subframe in which the terminal has received NACK through an HARQ indicator channel or the subframe in which the terminal has received information indicating retransmission through an uplink grant. The resource block to be used for an uplink data channel in the case of retransmission can be set independently in accordance with a case in which NACK has been received through an HARQ indicator channel and a case in which information indicating retransmission is included in an uplink grant. If NACK has been received through an HARQ indicator channel, the terminal retransmits an uplink data channel by using the resource block allocated to the uplink data channel in the previous transmission. On the other hand, if information indicating retransmission is included in an uplink grant, the terminal retransmits an uplink data channel by using the resource block indicated by allocation resource block information included in the uplink grant.

An uplink data channel which is newly set by semi-persistent scheduling is transmitted in an uplink subframe, which is a subframe four or more subframes subsequent to the subframe in which the terminal has received information indicating semi-persistent scheduling through an uplink grant transmitted in a downlink control channel. Thereafter, until the terminal receives an instruction to stop semi-persistent scheduling, it transmits uplink data channels by using the subframe interval indicated by information concerning semi-persistent scheduling which was set by the higher layer and by using the resource block in which the uplink data channel which was set by the previous semi-persistent scheduling was transmitted.

An uplink data channel set by TTI bundling is transmitted in an uplink subframe, which is a subframe four or more subframes subsequent to the subframe in which the terminal has received information indicating transmission through an uplink grant transmitted in a downlink control channel. The uplink data channel is transmitted by using four contiguous uplink subframes starting from the above-described uplink subframe.

The radio resource to be allocated to an uplink control channel can be set independently in accordance with the type of data included in this uplink control channel, that is, whether the data included in the uplink control channel indicates information concerning whether or not decoding of downlink information data has succeeded, a scheduling request for an uplink data channel, or channel state information concerning a downlink.

If information concerning whether or not decoding of downlink information data has succeeded is included in the uplink control channel, the uplink control channel is transmitted by using a resource block associated with a downlink assignment corresponding to this downlink information data. The uplink control channel is transmitted by using an uplink subframe, which is a subframe four or more subframes subsequent to the downlink subframe in which this downlink information data has been transmitted.

If a scheduling request for an uplink data channel is included in the uplink control channel, the uplink control channel is transmitted by using a resource block set by the higher layer. The uplink control channel is transmitted by using a subframe in which a scheduling request can be transmitted. The subframes in which a scheduling request for an uplink data channel can be transmitted are set in the time period. The subframes in which a scheduling request can be transmitted are set by the higher layer by using periodicity information.

If channel state information concerning a downlink is included in the uplink control channel, the uplink control channel is transmitted by using resource block information set by the higher layer. The uplink control channel is also transmitted by using subframe information set by the higher layer. The transmission subframe for the uplink control channel including channel state information concerning a downlink is set in the time period. The transmission subframe for the uplink control channel including channel state information concerning a downlink is set by the higher layer by using periodicity information.

The uplink terminal specific reference signal is transmitted after being included in a resource allocated to an uplink data channel or an uplink control channel. Accordingly, the uplink terminal specific reference signal is transmitted by using a resource block and a subframe allocated to the associated uplink data channel or uplink control channel.

The radio resource to be allocated to a sounding reference signal can be set independently in accordance with whether the sounding reference signal is a periodic sounding reference signal or an aperiodic sounding reference signal.

The periodic sounding reference signal is transmitted by using resource block information set by the higher layer. The periodic sounding reference signal is transmitted by using subframe information set by the higher layer. The transmission subframe for the periodic sounding reference signal is set in the time period. The transmission subframe for the periodic sounding reference signal is set by the higher layer by using periodicity information.

The aperiodic sounding reference signal is transmitted by using resource block information set by the higher layer. The aperiodic sounding reference signal is transmitted by using subframe information set by the higher layer.

Techniques for conducting traffic adaptation will be discussed below. For conducting traffic adaptation, the technique for varying (reconfiguring and changing) the uplink-downlink configuration (TDD UL-DL reconfiguration) and the technique for setting subframes (frexible subframes) that can be flexibly set as uplink subframes or downlink subframes are available.

The technique for varying the uplink-downlink configuration is a technique for varying the ratio between the number of uplink subframes and the number of downlink subframes within a radio frame by changing the uplink-downlink configuration information on the basis of the uplink-downlink configuration table shown in Fig. 3.

In the technique for varying the uplink-downlink configuration, the base station supplies uplink-downlink configuration information to a terminal through RRC signaling. Basically, the base station changes the uplink-downlink configuration at intervals longer than the radio frame length (10 ms). The uplink-downlink configuration information is supplied to each terminal from the base station through RRC signaling.

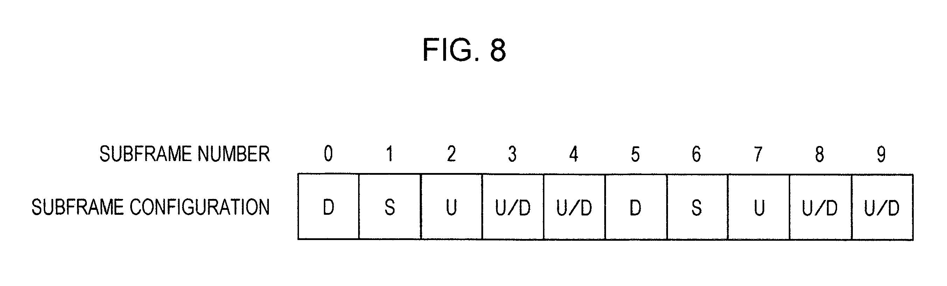

In the technique for setting flexible subframes, a predetermined subframe is set as a flexible subframe, and this flexible subframe is changed to an uplink subframe or a downlink subframe in response to an instruction from the base station to a terminal. Fig. 8 illustrates an example of the configuration of a radio frame including flexible subframes. "U" indicates an uplink subframe, "D" indicates a downlink subframe, "S" indicates a special subframe, and "U/D" indicates a flexible subframe. In the example shown in Fig. 8, subframes of subframe numbers 3, 4, 8, and 9 are flexible subframes. First, the terminal obtains information concerning the configuration of a radio frame including flexible subframes and identifies the positions of the flexible subframes within the radio frame. Then, the terminal receives an instruction form the base station and performs uplink transmission processing or downlink reception processing. An instruction from the base station is given through, for example, an uplink grant (PDCCH signaling). Concerning a flexible subframe for which an instruction has not been received from the base station, the terminal performs processing in accordance with the role initially set for the subframe. For example, the terminal regards a flexible subframe for which an instruction has not been received from the base station as an uplink subframe.

In the technique for setting flexible subframes, the base station supplies uplink-downlink configuration information used as a base reference to a terminal through system information. That is, in this technique, the radio frame configuration used as a base reference is first set, and uplink communication resources and downlink communication resources are varied by using flexible subframes included in the radio frame configuration.

In this case, if an uplink subframe is set in one cell and a downlink subframe is set in an adjacent cell in the same subframe number, and vice versa, inter-base-station interference or inter-terminal interference, which is one type of inter-cell interference, occurs.

The inter-base-station interference is interference of a downlink signal transmitted from a base station which may influence uplink communication performed by a base station of an adjacent cell. This will be explained more specifically. The base station 101 performs reception processing for an uplink signal from the terminal 102, and at the same time, the base station 111 performs transmission processing for a downlink signal to the terminal 112. In this case, the downlink signal transmitted from the base station 111 enters the receiving device of the base station 101 so as to decrease the precision in decoding the uplink signal transmitted from the terminal 102. That is, the downlink signal transmitted from the base station 111 is an interference signal for the uplink signal transmitted from the terminal 102.

The inter-terminal interference is interference of an uplink signal transmitted from a terminal which may influence downlink communication performed by a terminal of an adjacent cell. This will be explained more specifically. The terminal 102 performs transmission processing for an uplink signal to the base station 101, and at the same time, the terminal 112 performs reception processing for a downlink signal transmitted from the base station 111. In this case, the uplink signal transmitted from the terminal 102 enters the receiving device of the terminal 112 so as to decrease the precision in decoding the downlink signal transmitted from the base station 111. That is, the uplink signal transmitted from the terminal 102 is an interference signal for the downlink signal transmitted from the base station 111.

In the environment where the uplink communication coverage and the downlink communication coverage are different in a heterogeneous network, the inter-terminal interference occurs more noticeable. Since the RRH 121 transmits signals by using power lower than that in the base station 111, the downlink communication coverage is narrower. In contrast, since the uplink coverage is mainly determined by transmission power of a terminal, a wider coverage may be set for the uplink coverage than that for the downlink communication coverage. Accordingly, at the same terminal position, a base station to which a terminal is connected in uplink communication and a base station to which a terminal is connected in downlink communication may be different. In this situation, there may be a terminal performing uplink communication and a terminal performing downlink communication located at the same position.

A description will be given below of the configuration of this embodiment that is effective against the above-described inter-cell interference.

In the first embodiment of the present invention, if the base station 101 sets an uplink subframe and the base station 111, which is different from the base station 101, sets a downlink subframe by using the same band, inter-cell interference occurs. Accordingly, the base station 101 sets, for the terminal 102 communicating with the base station 101, an uplink subframe or a special subframe in which the transmission of an uplink signal scheduled to be transmitted from the terminal 102 is restricted.

An uplink transmission restriction subframe is a subframe in which the transmission of an uplink signal is restricted. The uplink transmission restriction subframe may be set for, for example, an uplink subframe or a special subframe. Hereinafter, an uplink subframe set as an uplink transmission restriction subframe is called an uplink blank subframe or an uplink mute subframe, while a special subframe set as an uplink transmission restriction subframe is called an UpPTS blank subframe, an uplink blank special subframe, or an uplink mute special subframe. A terminal in which an uplink transmission restriction subframe is set restricts the transmission of an uplink signal. Thus, in the communication system, it is possible to suppress the interference which may influence a terminal performing downlink communication located in a cell different from a cell in which the above-described terminal that restricts the transmission of an uplink signal is located.

In the terminal 102 which will transmit an uplink signal, an uplink transmission restriction subframe is set by the base station 101. The terminal 102 then restricts the transmission of an uplink signal which is scheduled to be transmitted by using the subframe set as the uplink transmission restriction subframe, for the terminal 112 which belongs to the cell 110 and which performs reception processing for a downlink signal. With this operation, the terminal 112 can receive a downlink signal from the base station 111 without being influenced by a signal transmitted from the terminal 102. That is, by setting an uplink transmission restriction subframe, the transmission of an uplink signal can be restricted, and thus, it is possible to suppress inter-terminal interference.

In this embodiment, the base station supplies information concerning the configuration of uplink transmission restriction subframes (uplink transmission restriction subframe configuration information, uplink blank subframe configuration information, uplink blank subframeConfig, mute subframe configuration information, and restriction information) to each terminal. The uplink transmission restriction subframe configuration information indicates subframes in which the transmission of an uplink signal is restricted. Information concerning the configuration of uplink transmission restriction subframes is set in a terminal by the base station. If a subframe indicated by the information concerning the configuration of uplink transmission restriction subframes is an uplink subframe, the terminal restricts the transmission of an uplink signal in this subframe. That is, an uplink transmission restriction subframe is a subframe which is an uplink subframe and which is a subframe indicated by the uplink transmission restriction subframe configuration information.

The base station supplies uplink transmission restriction subframe configuration information to a terminal through RRC signaling. That is, an uplink transmission restriction subframe can be set individually in a terminal. The terminal 102-B performing uplink transmission near the base station 101 is far away from the terminal 112 which receives a downlink signal in the adjacent cell 110. Accordingly, the possibility that inter-terminal interference will occur due to an uplink signal transmitted by the terminal 102-B is low. In this case, if the proportion of subframes in which the transmission of an uplink signal will be canceled or restricted to the total number of uplink subframes set in the terminal 102-B is high, the radio resources for uplink communication are considerably decreased. Accordingly, it is preferable that the proportion of uplink transmission restriction subframes set in the terminal 102-B to the total number of uplink subframes set in the terminal 102-B be low. In contrast, the terminal 102-A is located far away from the base station 101 and is close to the terminal 112 which receives a downlink signal in the adjacent cell. Accordingly, the possibility that the inter-terminal interference will occur due to an uplink signal transmitted by the terminal 102-A is high. Thus, the terminal 102-A sets an uplink transmission restriction subframe for an uplink subframe which may cause interference in the terminal 112. Since the transmission of an uplink signal which is scheduled to be transmitted is restricted, the uplink communication throughput of the terminal 102-A is decreased. On the other hand, since the terminal 102-B, which is unlikely to cause interference in the terminal 112, can transmit an uplink signal which is scheduled to be transmitted, the uplink communication throughput of the terminal 102-B is not decreased. Accordingly, the averaged throughput of the terminals that perform uplink communication with the base station 101 is only slightly decreased. Because of this reason, compared with a case in which an uplink transmission restriction subframe is set individually in a base station (cell), the uplink communication throughput is not considerably decreased by setting an uplink transmission restriction subframe individually in a terminal.

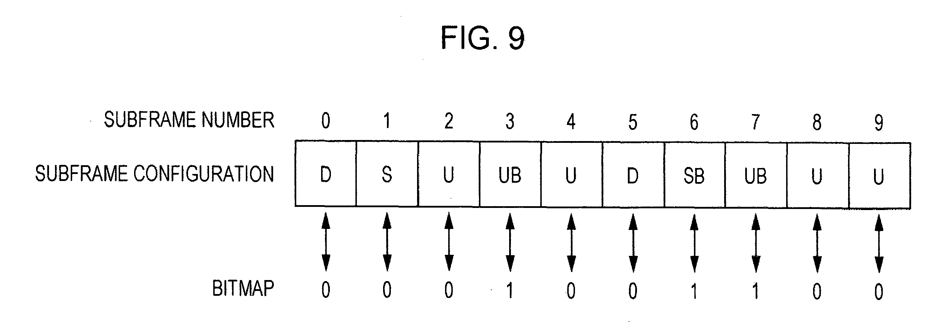

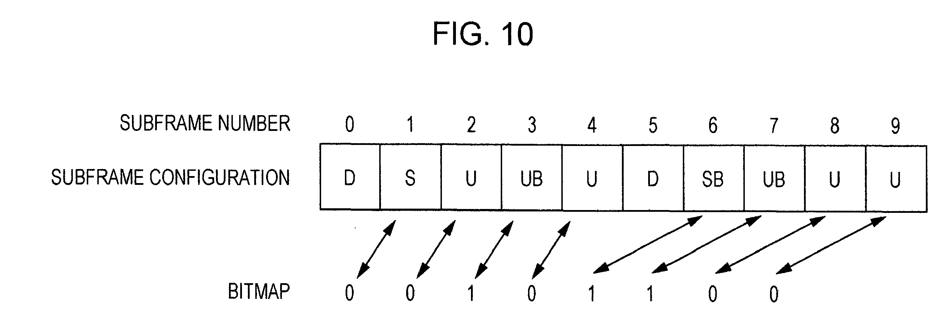

In this embodiment, the base station supplies uplink transmission restriction subframe configuration information in a bitmap format as a subframe set indicating one or more subframes. The bitmap format is represented by a set of bits corresponding to the subframes. The information concerning the configuration of uplink transmission restriction subframes is information indicating whether the uplink transmission restriction subframe is "enabled" or "disabled" in each of the subframes corresponding to the bits of the bitmap. If the uplink transmission restriction subframe is "enabled" in a subframe, it means that this subframe corresponding to the associated bit is regarded as an uplink transmission restriction subframe (for example, a subframe in which an uplink signal is not transmitted). If the uplink transmission restriction subframe is "disabled" in a subframe, it means that this subframe corresponding to the associated bit is regarded as a regular subframe, that is, an uplink subframe (for example, a subframe in which an uplink signal is transmitted) or a special subframe. The configurations of uplink transmission restriction subframes and examples of a bitmap representing subframes are shown in Figs. 9 and 10. "U" indicates an uplink subframe, "UB" indicates an uplink blank subframe, "D" indicates a downlink subframe, "S" indicates a special subframe, and "SB" indicates an UpPTS blank subframe. In the TDD scheme, in addition to uplink subframes, downlink subframes and special subframes are set within a single component carrier. Accordingly, as the above-described bitmap configuration, there are two types of configurations, that is, the configuration in which bits are associated with downlink subframes in addition to uplink subframes and special subframes, and the configuration in which bits are associated with only uplink subframes and special subframes.

In Fig. 9, bits are allocated such that uplink subframes, downlink subframes, and special subframes are associated with 0 as information of bits included in the bitmap format and such that uplink blank subframes and UpPTS blank subframes are associated with 1 as the information of bits included in the bitmap format. That is, when the information of bits included in the bitmap format indicates 1, it means that the uplink transmission restriction subframe is enabled, and when the information of bits included in the bitmap format indicates 0, it means that the uplink transmission restriction subframe is disabled.

In the allocation method shown in Fig. 9, the information of bits included in the bitmap format is allocated to all the subframes. In other words, the subframes and the bits of the bitmap format are associated with each other in a one-to-one correspondence.

The subframes associated with the bit values included in the bitmap format may be inverted. That is, 0 is associated with subframes in which the setting of the restriction of the transmission of an uplink signal is enabled, while 1 is associated with subframes in which the setting of the restriction of the transmission of an uplink signal is disabled.

The base station 101 transmits uplink transmission restriction subframe configuration information in the bitmap format shown in Fig. 9 to the terminals 102-A and 102-B through RRC signaling. The terminal 102 receives the above-described configuration information from the base station 101 and transmits it to the subframe interpreter 404. The subframe interpreter 404 sequentially allocates the bits of the bitmap starting from the first bit to the subframe numbers starting from the head subframe number, on the basis of the radio frame configuration identified by the subframe interpreter 404 in advance. If an uplink transmission restriction subframe is set for a downlink subframe, the subframe interpreter 404 identifies this subframe as a downlink subframe. In this manner, the terminal 102 identifies subframes which are set as uplink transmission restriction subframes from the uplink transmission restriction subframe configuration information received from the base station.

In the uplink transmission restriction subframe configuration information shown in Fig. 9, bits are also allocated to downlink subframes, and thus, unnecessary bit information is supplied to the terminal, which may increase the overhead. An example of the configuration of the bitmap format in which bits are not allocated to downlink subframes is shown in Fig. 10. More specifically, in this configuration, uplink subframes and special subframes are associated with 0, while uplink transmission restriction subframes are associated with 1. In the example shown in Fig. 10, after eliminating bit information allocated to downlink subframes in which an uplink signal is never transmitted, the uplink transmission restriction subframe configuration information is supplied. In the example shown in Fig. 10, the amount of information necessary for supplying the uplink transmission restriction subframe configuration information can be reduced by two bits, compared with the example shown in Fig. 9.

The base station 101 transmits uplink transmission restriction subframe configuration information in the bitmap shown in Fig. 10 to the terminals 102-A and 102-B through RRC signaling. The terminal 102 receives the above-described configuration information from the base station 101 and transmits it to the subframe interpreter 404. The subframe interpreter 404 sequentially allocates the bits of the bitmap starting from the first bit to the subframe numbers starting from the head subframe number, on the basis of the radio frame configuration identified by the subframe interpreter 404 in advance. If the subframe is a downlink subframe, the subframe interpreter 404 does not perform interpretation processing for this frame and jumps to the subsequent subframe, thereby identifying an uplink subframe which is set as an uplink transmission restriction subframe. In this manner, unnecessary information for the configuration of the uplink transmission restriction subframes is not supplied. Thus, the base station can supply uplink transmission restriction subframe configuration information to the terminal with the reduced overhead.

The number of resource elements used for an uplink signal transmitted in an UpPTS is smaller than that for an uplink signal transmitted in an uplink subframe. Accordingly, it is less likely that interference will occur due to an uplink signal transmitted in an UpPTS. Thus, the setting of an UpPTS blank subframe may not be necessary, depending on the communication system. In this case, it is preferable that the base station 101 supply the uplink transmission restriction subframe configuration information in a bitmap format in which uplink subframes are associated with 0 and uplink blank subframes are associated with 1 and downlink subframes and special subframes are not included. Then, the terminal 102 obtains the uplink transmission restriction subframe configuration information from the base station 101, and associates the bits included in the configuration information with the uplink subframes so as to identify the configuration of the uplink blank subframes. In the configuration of the bitmap format in which only uplink subframes and uplink blank subframes are set, the total number of bits used for reporting uplink transmission restriction subframes can further be reduced, compared with the configuration of the bitmap format shown in Fig. 10.

The configuration shown in Fig. 10 in which bits are associated with uplink subframes and special subframes is dependent on the radio frame configuration set by the terminal. That is, if the radio frame configuration used as a base reference is changed as a result of receiving uplink-downlink configuration information again, it is possible that the terminal may set an uplink subframe or a special subframe, which is not intended by the base station, as an uplink transmission restriction subframe. Accordingly, concerning the configuration shown in Fig. 10, it is preferable that, when the radio frame configuration is changed, the base station supply uplink transmission restriction subframe configuration information, together with the radio frame configuration. It is also preferable that, when the radio frame configuration is changed, the terminal refrain from making the configuration of uplink transmission restriction subframes enabled until the uplink transmission restriction subframe configuration information is supplied. That is, if the terminal receives information concerning the radio frame configuration only, it changes the radio frame configuration and resets the configuration of uplink transmission restriction subframes.

If the terminal reads information until the final bit of the bitmap indicated by the supplied uplink transmission restriction subframe configuration information, it returns to the first bit and restarts to read the information. It is assumed, for example, that uplink transmission restriction subframe configuration information has been supplied as a twenty-bit bitmap format. In this case, subframe numbers 0 to 19 are associated with the first through twentieth bits from the head of the bitmap. Subframe numbers 20 to 39 are associated with the first through twentieth bits from the head of the bitmap. The subsequent subframes are also associated with the corresponding bits by repeating the bitmap.

A subframe in which the transmission of an uplink signal is restricted is set in a terminal by the base station. Scheduling for uplink communication resources is also performed by the base station. In this case, the base station performs scheduling such that an uplink signal resource is not allocated to an uplink subframe which is set as a subframe in which the transmission of an uplink signal is restricted. Thus, the transmission of an uplink signal can be restricted. However, there is a case in which an uplink signal resource is allocated to a subframe in which the transmission of an uplink signal is restricted, that is, a case in which an uplink signal that can be transmitted without receiving an uplink grant is allocated immediately before the uplink signal is transmitted, for example, a case in which the uplink signal is periodically transmitted. Examples of the uplink signal to which a resource is periodically allocated (periodic-transmission uplink signal) are an uplink data channel which is set by semi-persistent scheduling, an uplink control channel including scheduling request information, an uplink control channel including downlink channel state information, and a periodic sounding reference signal. It is possible that a resource periodically allocated to the above-described type of uplink signal be allocated to an uplink transmission restriction subframe. A description will now be given of methods for processing an uplink signal when a resource for this uplink signal is allocated to an uplink transmission restriction subframe.

As one method, an uplink signal to be transmitted is not transmitted, but is discarded in an uplink transmission restriction subframe (first uplink signal processing method).

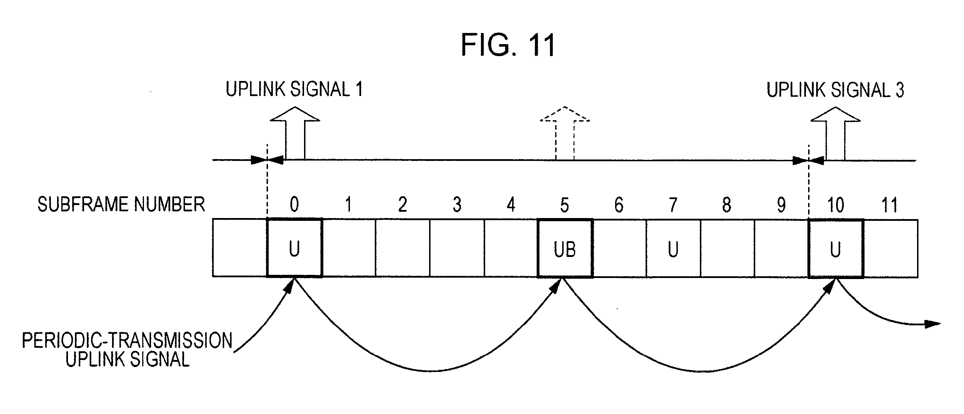

Fig. 11 schematically illustrates the first processing method to be employed when a resource for an uplink signal is allocated to a subframe in which the transmission of an uplink signal is restricted. Fig. 11 shows that resources for uplink signals for the terminal 102 are periodically allocated in every five frames, that is, to the subframes of subframe numbers 0, 5, and 10. In the subframes of subframe numbers 0, 5, and 10, uplink signals 1, 2, and 3, respectively, are scheduled to be transmitted. It is now assumed that the subframe of the subframe number 5 is set as an uplink transmission restriction subframe.

In the first uplink signal processing method, the terminal 102 does not generate the uplink signal 2 in a subframe prior to the subframe number 5, and thus does not transmit the uplink signal 2 in the subframe of the subframe number 5. Alternatively, the terminal 102 generates the uplink signal 2 in a subframe prior to the subframe number 5, but discards it without performing transmission processing for the uplink signal 2 in the subframe of the subframe number 5. In the first uplink signal processing method, the terminal 102 does not transmit the uplink signal 2 in a subframe subsequent to the subframe number 5, either.

In a case in which the terminal 102 employs the first uplink signal processing method, if uplink information data has not yet been generated in the higher layer 400, the uplink signal processing method determining unit 430 sends an instruction to the terminal information data processor 401, and the terminal information data processor 401 does not generate uplink information data. Alternatively, if uplink information data has already been generated in the higher layer 400, the uplink signal processing method determining unit 430 sends an instruction to the uplink radio transmission section 415, and the uplink radio transmission section 415 discards the uplink transmission signal without performing radio transmission processing for this uplink transmission signal.

As another method, an uplink signal to be transmitted is not transmitted in an uplink transmission restriction subframe, but is transmitted by using a resource allocated to the subframe in the subsequent period (second uplink signal processing method).

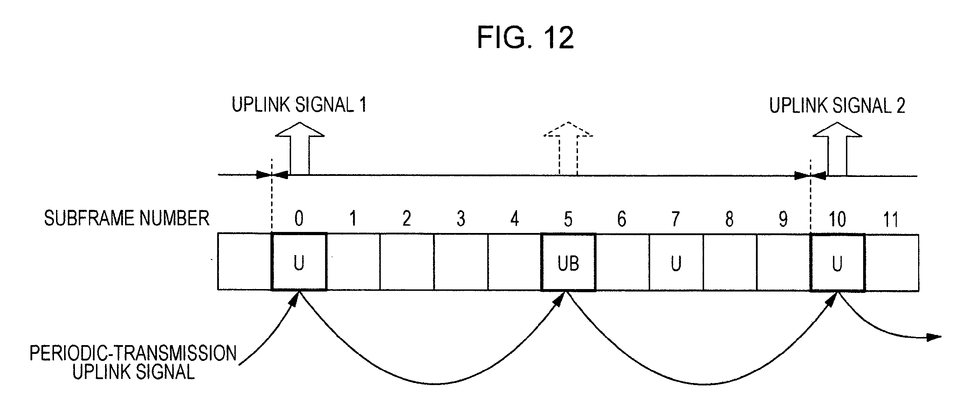

Fig. 12 schematically illustrates the second uplink signal processing method to be employed when a resource for an uplink signal is allocated to a subframe in which the transmission of an uplink signal is restricted. Fig. 12 shows that resources for uplink signals for the terminal 102 are periodically allocated in every five frames, that is, to the subframes of subframe numbers 0, 5, and 10. In the subframes of subframe numbers 0, 5, and 10, uplink signals 1, 2, and 3, respectively, are scheduled to be transmitted. It is now assumed that the subframe of the subframe number 5 is set as an uplink transmission restriction subframe.

In the second uplink signal processing method, the terminal 102 does not generate the uplink signal 2 in a subframe prior to the subframe number 5, and thus does not transmit the uplink signal 2 in the subframe of the subframe number 5. Alternatively, the terminal 102 generates the uplink signal 2 in a subframe prior to the subframe number 5, but discards it without performing transmission processing for the uplink signal 2 in the subframe of the subframe number 5. In the second uplink signal processing method, the terminal 102 generates the uplink signal 2 in a subframe prior to the subframe number 10, and transmits it by using the resource allocated to the subframe of the subframe number 10 in the subsequent period. The uplink signal 3 to be transmitted in the subframe of the subframe number 10 is transmitted by using the resource allocated to the subframe in the subsequent period.

In a case in which the terminal 102 employs the second uplink signal processing method, if uplink information data has not yet been generated in the higher layer 400, the uplink signal processing method determining unit 430 sends an instruction to the terminal information data processor 401, and the terminal information data processor 401 does not generate uplink information data. Alternatively, if uplink information data has already been generated in the higher layer 400, the uplink signal processing method determining unit 430 sends an instruction to the uplink radio transmission section 415, and the uplink radio transmission section 415 discards the uplink transmission signal without performing radio transmission processing for this uplink transmission signal.

As another method, an uplink signal to be transmitted is not transmitted in an uplink transmission restriction subframe, but is transmitted by using a resource different from periodically allocated resources (third uplink signal processing method).

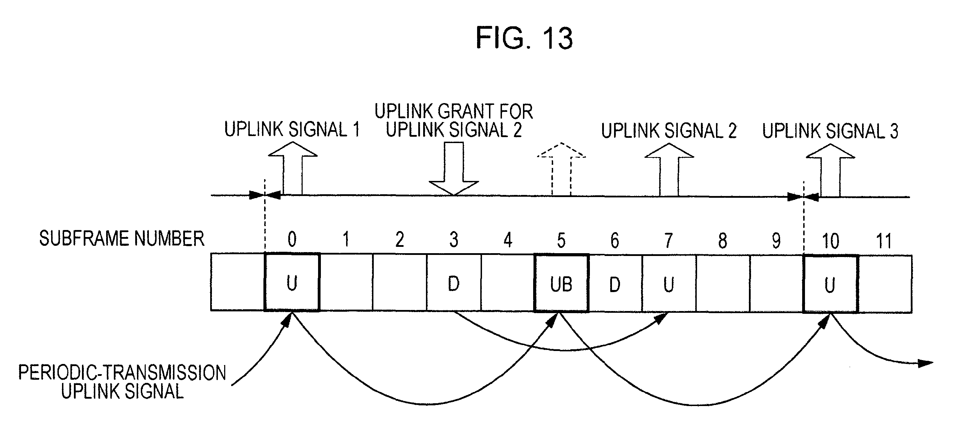

Fig. 13 schematically illustrates the third uplink signal processing method to be employed when a resource for an uplink signal is allocated to a subframe in which the transmission of an uplink signal is restricted. Fig. 13 shows that resources for uplink signals for the terminal 102 are periodically allocated in every five frames, that is, to the subframes of subframe numbers 0, 5, and 10. In the subframes of subframe numbers 0, 5, and 10, uplink signals 1, 2, and 3, respectively, are scheduled to be transmitted. It is now assumed that the subframe of the subframe number 5 is set as an uplink transmission restriction subframe.

In the third uplink signal processing method, the terminal 102 does not generate the uplink signal 2 in a subframe prior to the subframe number 5, and thus does not transmit the uplink signal 2 in the subframe of the subframe number 5. Alternatively, the terminal 102 generates the uplink signal 2 in a subframe prior to the subframe number 5, but discards it without performing transmission processing for the uplink signal 2 in the subframe of the subframe number 5. In the third uplink signal processing method, the terminal 102 generates the uplink signal 2 in a subframe prior to the subframe number 7 which is specified by the uplink grant for the uplink signal 2 received in the subframe number 3, and transmits the uplink signal 2 by using the subframe of the subframe number 7.

The resource different from resources periodically allocated to uplink signals is a subframe which is allocated in advance. This resource is allocated to, for example, the first uplink subframe immediately after an uplink transmission restriction subframe or in an uplink subframe specified through RRC signaling. It is preferable that, as this resource, a resource different from the resources periodically allocated to uplink signals be set. In the example shown in Fig. 13, the subframe of the subframe number 7 is allocated as this resource in advance. In this case, the terminal 102 can transmit the uplink signal 2 without the need of an instruction by an uplink grant from the base station 101. The resource block for the uplink signal 2 is the same as that allocated to the subframe of the subframe number 5 in which the uplink signal 2 was scheduled to be transmitted. If there is a contention between the resource for the uplink signal 2 and the resource for another uplink signal, the terminal 102 processes the uplink signal 2 by using the first or second uplink signal processing method.

Alternatively, the resource different from resources periodically allocated to uplink signals is allocated to an uplink subframe which is specified by an uplink grant or an HARQ indicator channel associated with the uplink signal 2. The base station 101 transmits an uplink grant or an HARQ indicator channel associated with the uplink signal 2 to the terminal 102. In the example shown in Fig. 13, the base station 101 transmits an uplink grant to the terminal 102 by using the downlink subframe of the subframe number 3. The terminal 102 transmits the uplink signal 2 in the subframe of the subframe number 7 specified by the uplink grant or the HARQ indicator channel. In this case, the terminal 102 waits for receiving an uplink grant associated with the uplink signal 2 from the base station 101 within a predetermined period. If the terminal 102 does not receive a request from the base station 101 within the predetermined period, the terminal 102 processes the uplink signal by using the first or second uplink signal processing method. The predetermined period is, for example, a period equivalent to five frames before and five frames after the subframe of the subframe number 5. The predetermined period is reported to the terminal 102 as information supplied from the higher layer.

In a case in which the terminal 102 employs the third uplink signal processing method, if uplink information data has not yet been generated in the higher layer 400, the uplink signal processing method determining unit 430 sends an instruction to the terminal information data processor 401, and the terminal information data processor 401 does not generate uplink information data. Alternatively, if uplink information data has already been generated in the higher layer 400, the uplink signal processing method determining unit 430 sends an instruction to the uplink radio transmission section 415, and the uplink radio transmission section 415 discards the uplink transmission signal without performing radio transmission processing for this uplink transmission signal.

In the second and third uplink signal processing methods, an uplink signal is not transmitted in a subframe in which this uplink signal is scheduled to be transmitted, and instead, it is transmitted in an uplink subframe after this scheduled subframe. That is, the second and third uplink signal processing methods may be considered as processing for delaying the transmission of an uplink signal which is scheduled to be transmitted in an uplink transmission restriction subframe.

As another method, an uplink signal is transmitted in an uplink transmission restriction subframe by using the mapping of resource elements that does not cause interference which influences a downlink signal (fourth uplink signal processing method).

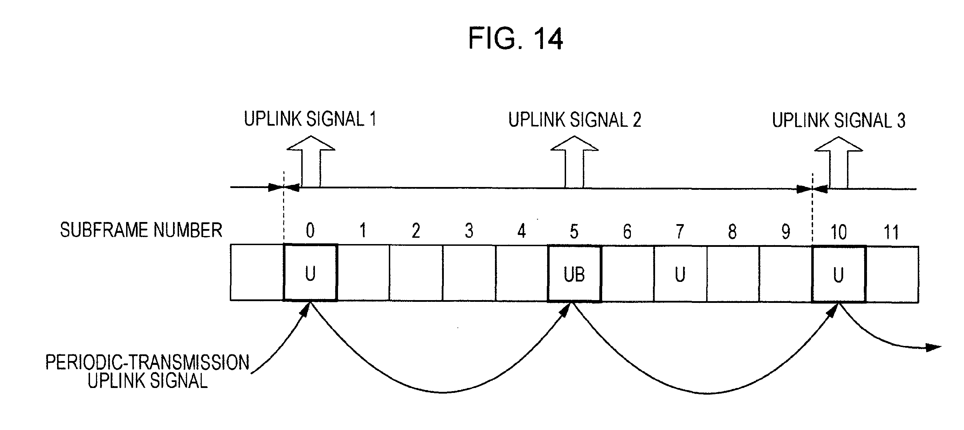

Fig. 14 schematically illustrates the fourth processing method to be employed when a resource for an uplink signal is allocated to a subframe in which the transmission of an uplink signal is restricted. Fig. 14 shows that resources for uplink signals for the terminal 102 are periodically allocated in every five frames, that is, to the subframes of subframe numbers 0, 5, and 10. In the subframes of subframe numbers 0, 5, and 10, uplink signals 1, 2, and 3, respectively, are scheduled to be transmitted. It is now assumed that the subframe of the subframe number 5 is set as an uplink transmission restriction subframe.

In the fourth uplink signal processing method, the terminal 102 generates an uplink signal 2' in a subframe prior to the subframe number 5 by using the mapping of resource elements that does not cause interference which influences a downlink signal, and transmits the uplink signal 2' by performing transmission processing for this uplink signal 2' in the subframe of the subframe number 5.

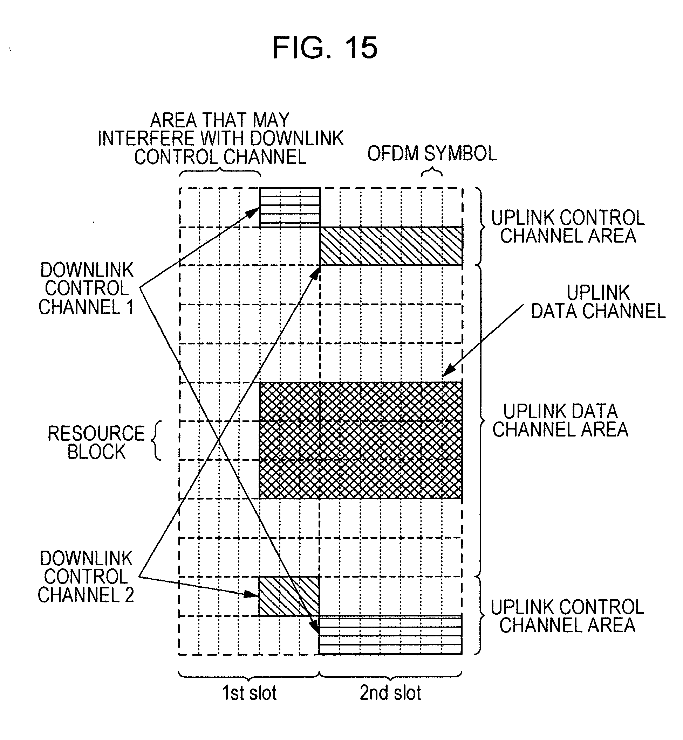

Fig. 15 illustrates an example of the configuration of resource elements for the uplink signal 2' that does not cause interference which influences a downlink signal. For example, if a downlink control channel is used in a downlink subframe for an adjacent cell, the first three SC-FDMA symbols of an uplink data channel and those of an uplink control channel may interfere with the downlink control channel that will be received by a terminal within the adjacent cell. Accordingly, an uplink signal is not transmitted by using resource elements that are likely to cause interference (interference which may influence the downlink control channel), but is transmitted by using resource elements that are not likely to cause interference which influences the downlink control channel. The resource elements that are not used for transmitting an uplink signal are determined by the number of OFDM symbols of the downlink control channel used in a downlink subframe of the adjacent cell and by the time difference between the transmission timing of the uplink signal transmitted from the terminal 102 and the reception timing of the downlink signal received by the terminal 112. The resource elements that are not used for transmitting the uplink signal are reported by the base station 101 through RRC signaling or PDCCH signaling.

The uplink signal 2' is generated by removing (puncturing) a bit string to be mapped in resource elements that are not used for transmitting an uplink signal from the uplink information data. Alternatively, the uplink signal 2' is generated by performing the following rate matching. The coding rate of error correction codes of the uplink information data is adjusted in accordance with the number of bits that allow resource elements used for transmitting an uplink signal to be mapped.

In the fourth uplink signal processing method, some resource elements may not be used for transmitting an uplink signal so that they will not contend with, not only resource elements for the above-described downlink control channel used in a downlink subframe of the adjacent cell, but also resource elements for an extended downlink control channel, an HARQ indicator channel, a downlink reference signal, a synchronizing signal, and a detection reference signal which may be used in NCT in the adjacent cell.

In a case in which the terminal 102 employs the fourth uplink signal processing method, the uplink signal processing method determining unit 430 sends an instruction to the uplink transmission signal processor 414, and the uplink transmission signal processor 414 performs mapping of uplink data channels, uplink control channels, and an uplink reference signal in a configuration that does not cause interference which influences a downlink signal.

As another method, an uplink signal is transmitted in an uplink transmission restriction subframe by restricting transmission power so as to mitigate interference that influences a downlink signal (fifth uplink signal processing method).

Transmission of an uplink signal with high transmission power causes interference that considerably influences the reception of a downlink signal in an adjacent cell. On the other hand, transmission of an uplink signal with low transmission power reduces the influence of interference produced on the reception of a downlink signal. In the fifth uplink signal processing method, a terminal located near the cell edge transmits an uplink signal with low transmission power than that originally set in the terminal.

In a manner similar to the fourth uplink signal processing method, in the fifth uplink signal processing method, in the example shown in Fig. 14, the terminal 102 generates in a subframe prior to the subframe number 5 an uplink signal 2 with restricted transmission power so as to reduce the influence of interference produced on a downlink signal, and transmits the uplink signal 2 by performing transmission processing for this uplink signal 2 in the subframe of the subframe number 5.

Transmission power that may reduce the influence of interference of an uplink signal is set in relation to the channel attenuation value obtained by channel estimation. More specifically, when the channel attenuation value is high, the terminal is located far away from the base station with which the terminal is connecting, and thus, it is highly likely that the terminal is located near the cell edge. Accordingly, when the channel attenuation value exceeds a predetermined threshold, the terminal sets transmission power with restriction. Transmission power with restriction may be set in the following manner: the upper limit may be set for the transmission power with restriction, a certain value may be subtracted from the calculated value of power to be transmitted, or a certain value proportional to the channel attenuation value may be subtracted from the calculated value of power to be transmitted. Transmission power with restriction may be set individually according to the type of uplink signal. The above-described predetermined threshold is reported from the base station to the terminal via the higher layer.

By the use of transmission power that may reduce the influence of interference of an uplink signal, an uplink signal is transmitted with lower transmission power than that set for the terminal. Accordingly, the uplink signal transmitted with lower transmission power may not be receivable by the base station. Thus, for improving the reception quality in the base station, the terminal transmits the same uplink signal multiple times by using a plurality of subframes. For example, in the subframe of the subframe number 5 which is set as an uplink transmission restriction subframe, the terminal 102 transmits the uplink signal 2 with transmission power lower than that set for the uplink signal 2 by using the fifth uplink signal processing method. Then, in the subsequent subframe which is set as an uplink transmission restriction subframe, the terminal 102 retransmits the uplink signal 2 with transmission power lower than that set for the uplink signal 2. The base station 101 performs reception processing for the received two uplink signals 2 by using maximum ratio combining so as to obtain the reception quality comparable to an uplink signal transmitted with normal transmission power. If an uplink data channel is processed and transmitted by using the fifth uplink signal processing method, multiple transmission of the same uplink signal is implemented by using the HARQ function. If an uplink signal other than an uplink data channel is processed and transmitted by using the fifth uplink signal processing method, multiple transmission of the same uplink signal is implemented by setting the number of transmission times in advance.

The base station 101 performs reception processing in accordance with which uplink signal processing method is employed.

An example of the reception processing when the first uplink signal processing method is employed by the terminal 102 will be discussed below. Since the base station 101 knows that the uplink signal 2 from the terminal 102 will not be transmitted by using the subframe of the subframe number 5, it does not perform reception processing for the uplink signal 2. If the uplink signal 2 is transmitted through an uplink data channel, the base station 101 does not transmit ACK/NACK for the uplink signal 2 through the use of an uplink grant or an HARQ indicator channel. Then, the base station 101 performs reception processing for the uplink signal 3 in the subframe of the subframe number 10.

An example of the reception processing when the second uplink signal processing method is employed by the terminal 102 will be discussed below. Since the base station 101 knows that the uplink signal 2 from the terminal 102 will not be transmitted by using the subframe of the subframe number 5, it does not perform reception processing for the uplink signal 2. If the uplink signal 2 is transmitted through an uplink data channel, the base station 101 does not transmit ACK/NACK for the uplink signal 2 through the use of an uplink grant or an HARQ indicator channel. Then, the base station 101 performs reception processing for the uplink signal 2 in the subframe of the subframe number 10.

An example of the reception processing when the third uplink signal processing method is employed by the terminal 102 will be discussed below. Since the base station 101 knows that the uplink signal 2 from the terminal 102 will not be transmitted by using the subframe of the subframe number 5, it does not perform reception processing for the uplink signal 2. The base station 101 allocates a resource for the uplink signal 2 to the subframe of the subframe number 7, which is different from the subframe number 5, specified by an uplink grant or an HARQ indicator channel associated with the uplink signal 2. Then, the base station 101 performs reception processing for the uplink signal 2 in the subframe of the subframe number 7 to which the resource is allocated.

An example of the reception processing when the fourth uplink signal processing method is employed by the terminal 102 will be discussed below. Since the base station 101 knows that the uplink signal 2 from the terminal 102 will not be transmitted by using certain resource elements in the subframe of the subframe number 5, it performs reception processing for the uplink signal 2 with a configuration without such resource elements. More specifically, the base station 101 knows the positions of SC-FDMA symbols that are not used for transmitting the uplink signal 2 in the terminal 102. Accordingly, the base station 101 identifies the configuration of resource elements without such SC-FDMA symbols and then performs decoding processing.

An example of the reception processing when the fifth uplink signal processing method is employed by the terminal 102 will be discussed below. The base station 101 performs reception processing for the uplink signal 2 transmitted from the terminal 102 in the subframe of the subframe number 5.

The terminal utilizes one of the above-described five uplink signal processing methods. The terminal utilizes one of the uplink signal processing methods also for uplink signal processing for processing an uplink signal to be transmitted in an uplink transmission restriction subframe.

Alternatively, the terminal utilizes a plurality of uplink signal processing methods among the five uplink signal processing methods. The uplink signal processing may be individually set for each terminal, each uplink physical channel, or each uplink information data. The uplink signal processing is set through RRC signaling.

For example, if VoIP (Voice over Internet Protocol) data is transmitted by using an uplink data channel set by semi-persistent scheduling, even if part of packet data is lost, the influence caused by such lost packet data is negligible. Accordingly, the application of the first uplink signal processing method is preferable. If uplink information data other than VoIP data is transmitted by using an uplink data channel set by semi-persistent scheduling, it is necessary to transmit the entirety of packet data without losing even part of the packet data. Accordingly, the application of the second uplink signal processing method is preferable. If scheduling request information is transmitted in an uplink control channel with the configuration of PUCCH format 1, the application of the fourth uplink signal processing method is preferable. If downlink channel state information is transmitted in an uplink control channel with the configuration of PUCCH format 2, the application of the first uplink signal processing method is preferable. If a periodic sounding reference signal is transmitted, the application of the first uplink signal processing method is preferable.

The application of uplink signal processing may be set individually for an uplink physical channel. As an example, the base station sets the application of uplink signal processing in the terminal so that the first uplink signal processing will be applied only to periodic sounding reference signals. Whether or not uplink signal processing will be applied is set through RRC signaling. According to this setting, by using the first uplink signal processing method, the terminal does not transmit a periodic sounding reference signal in an uplink transmission restriction subframe. On the other hand, the uplink signal processing is not applied to other channels, such as uplink data channels and uplink control channels. Accordingly, the terminal may transmit other channels, such as an uplink data channel or an uplink control channel, in an uplink transmission restriction subframe. That is, by using the uplink signal processing, the terminal does not transmit a specific uplink physical channel in an uplink transmission restriction subframe. On the other hand, the terminal may transmit an uplink signal which does not include such a specific uplink physical channel in an uplink transmission restriction subframe.

The application of uplink signal processing may be set individually for an uplink physical channel. This also enables the terminal to transmit only a specific uplink physical channel in an uplink transmission restriction subframe and to restrict the transmission of uplink physical channels other than the specific uplink physical channel in an uplink transmission restriction subframe. As an example, the base station sets the application of uplink signal processing in the terminal so that the first uplink signal processing will be applied to uplink physical channels and uplink reference signals other than uplink control channels. According to this setting, by using the first uplink signal processing method, the terminal does not transmit uplink physical channels and uplink reference signals other than uplink control channels in uplink transmission restriction subframes. On the other hand, since the uplink signal processing is not applied to uplink control channels, the terminal may transmit an uplink control channel in an uplink transmission restriction subframe. That is, by using the uplink signal processing, the terminal does not transmit uplink physical channels other than a specific uplink physical channel in an uplink transmission restriction subframe, but may transmit an uplink signal which does not include uplink physical channels other than this specific uplink physical channel in an uplink transmission restriction subframe.

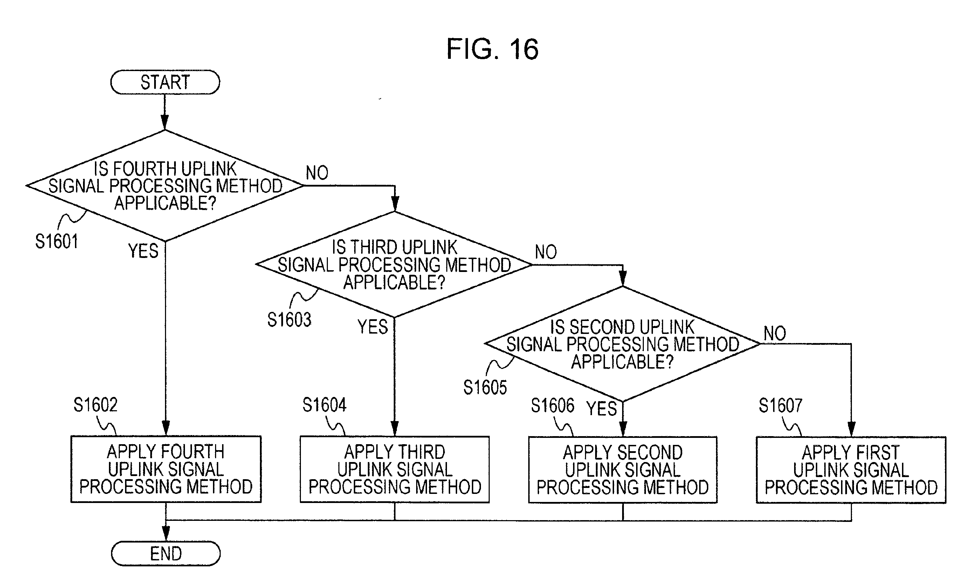

The terminal may select some or all of the above-described five uplink signal processing methods and prioritize them. The terminal 102 selects some or all of the above-described five uplink signal processing methods and determines sequentially by using the uplink signal processing method determining unit 430 whether or not each of the uplink signal processing methods can be utilized. Then, the terminal 102 applies the uplink signal processing method which has been determined to be utilized. Fig. 16 is a flowchart for determining an uplink signal processing method. For example, the terminal 102 selects the first through fourth uplink signal processing methods, and prioritizes them as in the fourth uplink signal processing method, the third uplink signal processing method, the second uplink signal processing method, and the first uplink signal processing method in descending order. The terminal 102 determines whether or not the fourth uplink signal processing method is applicable (step S1601). If the fourth uplink signal processing method is applicable (step S1601; YES), the fourth uplink signal processing method is applied (step S1602). If the application of the fourth uplink signal processing method is not suitable (step S1601; NO), the terminal 102 determines whether or not the third uplink signal processing method is applicable (step S1603). If the third uplink signal processing method is applicable (step S1603; YES), the third uplink signal processing method is applied (step S1604). If the application of the third uplink signal processing method is not suitable, either (step S1603; NO), the terminal 102 determines whether or not the second uplink signal processing method is applicable (step S1605). If the second uplink signal processing method is applicable (step S1605; YES), the second uplink signal processing method is applied (step S1606). If the application of the second uplink signal processing method is not suitable, either (step S1605; NO), the first uplink signal processing method is applied (step S1607).

The condition for determining whether or not an uplink signal processing method is applicable may be set individually for an uplink physical channel and uplink information data, by considering the importance of data and the influence which may be produced by the interference of an uplink signal. The condition for determining whether or not an uplink signal processing method is applicable is determined and fixed in a terminal in advance, or may be reported from the base station to each terminal by using control information supplied from the higher layer.

If the base station 101 re-supplies uplink transmission restriction subframe configuration information in a bitmap format to the terminal 102, the terminal 102 overwrites the configuration of uplink transmission restriction subframes on the basis of the received uplink transmission restriction subframe configuration information.

When canceling the configuration of uplink transmission restriction subframes, the base station supplies uplink transmission restriction subframe configuration information to the terminal in a bitmap format indicating that none of the subframes are set as uplink transmission restriction subframes. More specifically, the base station supplies information indicating that all the bits of the bitmap represent subframes which are not set as uplink transmission restriction subframes. Upon receiving uplink transmission restriction subframe configuration information in a bitmap format indicating that none of the subframes are set as uplink transmission restriction subframes, the terminal overwrites the configuration of subframes with the configuration of subframes without uplink transmission restriction subframes.

Alternatively, when canceling the configuration of uplink transmission restriction subframes, the base station supplies one-bit uplink transmission restriction subframe enable/disable information to a terminal. If the uplink transmission restriction subframe enable/disable information indicates "enable" (TRUE, 1), uplink transmission restriction subframes indicated by the uplink transmission restriction subframe configuration information are enabled (hereinafter such a state is called the enable state). If the uplink transmission restriction subframe enable/disable information indicates "disable" (FALSE, 0), uplink transmission restriction subframes indicated by the bitmap format are disabled, and the terminal regards all the subframes as original radio frames (hereinafter such a state is called the disable state).

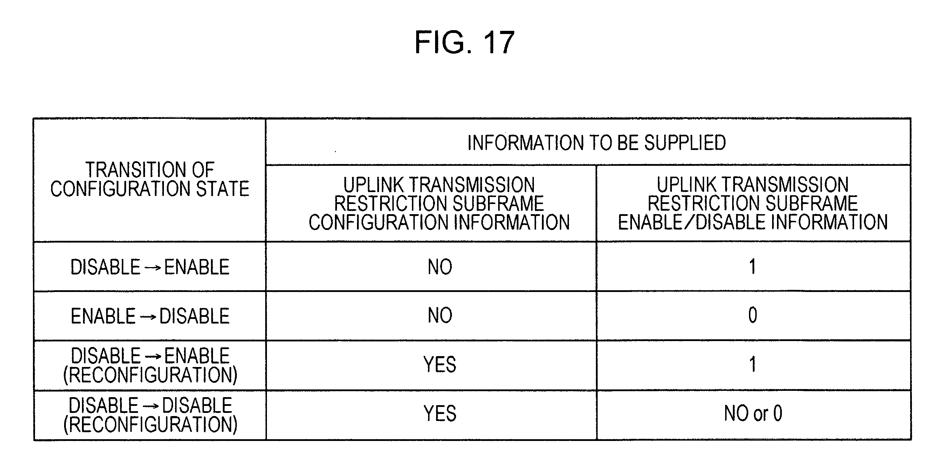

Fig. 17 illustrates a table indicating the uplink transmission restriction subframe enable/disable information in accordance with the transition of the state of the uplink transmission restriction subframe configuration. If the base station changes the disable state to the enable state, it supplies the uplink transmission restriction subframe enable/disable information indicating "enable" to the terminal without supplying the uplink transmission restriction subframe configuration information. If the base station changes the enable state to the disable state, it supplies the uplink transmission restriction subframe enable/disable information indicating "disable" to the terminal without supplying the uplink transmission restriction subframe configuration information. If the base station changes the disable state to the enable state and also reconfigures the uplink transmission restriction subframes, it supplies the uplink transmission restriction subframe reconfiguration information and the uplink transmission restriction subframe enable/disable information indicating "enable" at the same time. If the base station merely reconfigures the uplink transmission restriction subframes, it supplies the uplink transmission restriction subframe reconfiguration information. If the configuration state is not changed, the base station does not necessarily have to supply the uplink transmission restriction subframe enable/disable information.

The first embodiment of the present invention has been discussed. According to the first embodiment of the present invention, it is possible to reduce inter-cell interference caused by uplink communication and thus to improve the throughput of the overall communication system.

### (Second Embodiment)

A second embodiment will be described below. In the second embodiment, portions different from the first embodiment will be discussed, and portions which will not be discussed below are the same as those of the first embodiment.

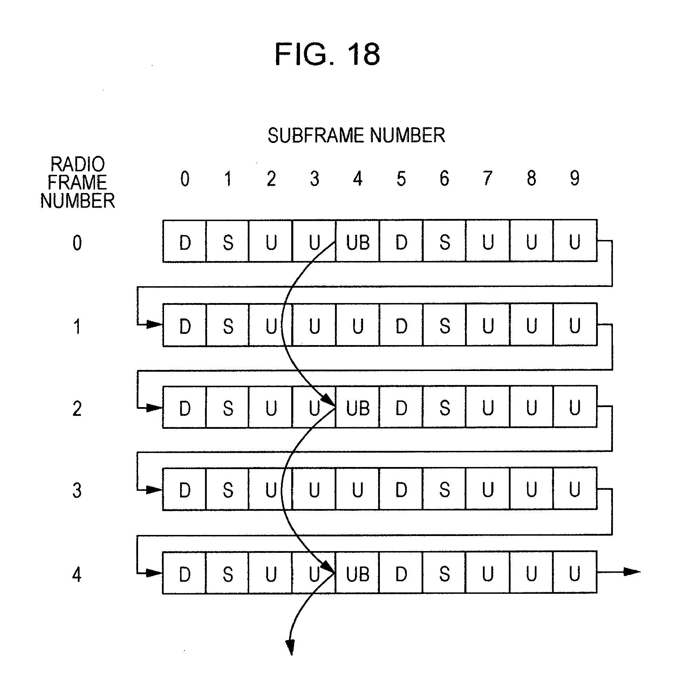

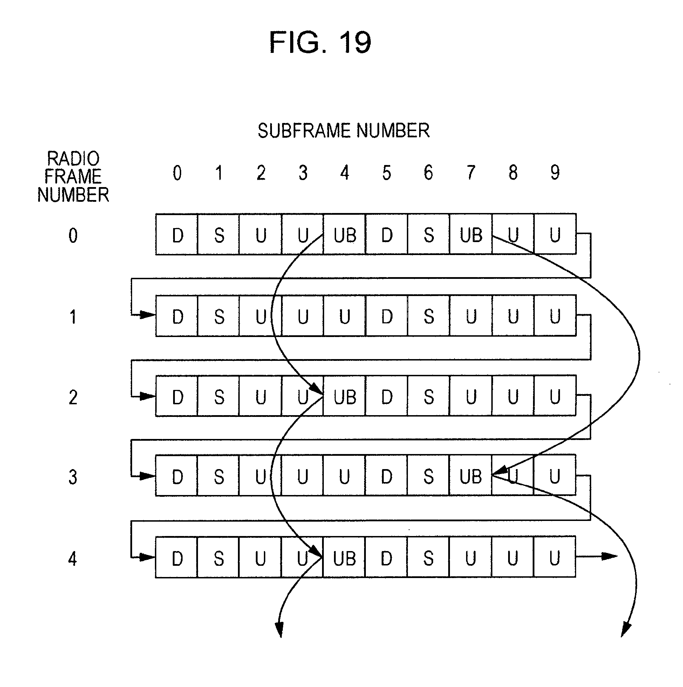

In this embodiment, uplink transmission restriction subframes are configured as a subframe set by using periodicity information and offset information. Figs. 18 and 19 illustrate examples of radio frame configurations when an uplink transmission restriction subframe is periodically set. In Fig. 18, based on a radio frame configuration in which uplink-downlink configuration information is 0, the subframes of the subframe number 4 of even-numbered radio frame numbers are set as uplink transmission restriction subframes. In Fig. 19, in addition to the subframes set as uplink transmission restriction subframes shown in Fig. 18, the subframes of the subframe number 7 of radio frame numbers which are multiples of three are set as uplink transmission restriction subframes. Uplink transmission restriction subframes may be set on the basis of the periodicity of subframes and the offset (shift) of a subframe with respect to a subframe used as a predetermined reference. In the example shown in Fig. 18, concerning the uplink transmission restriction subframes, the periodicity of subframes is 20, and the offset of a subframe with respect to the subframe used as a predetermined reference is 4. In the example shown in Fig. 19, concerning the uplink transmission restriction subframes, the periodicity of subframes is 30 and the offset of a subframe with respect to the subframe used as a predetermined reference is 7.

The base station supplies uplink transmission restriction subframe periodicity information (uplink blank subframe periodicity information, uplink blank subframe periodicity) and uplink transmission restriction subframe offset information (uplink blank subframe offset information, uplink blank subframe offset) to a terminal. The uplink transmission restriction subframe periodicity information and the uplink transmission restriction subframe offset information are supplied to each terminal through RRC signaling. The terminal identifies the positions of uplink transmission restriction subframes by using the obtained uplink transmission restriction subframe periodicity information and uplink transmission restriction subframe offset information. In this case, if a downlink subframe is set as an uplink transmission restriction subframe, the terminal identifies this frame as a downlink subframe.

The uplink transmission restriction subframe offset information is determined with a combination of the uplink transmission restriction subframe periodicity information. For example, if the periodicity of subframes is 20, one of the twenty subframes is set as the uplink transmission restriction subframe offset information. In the example shown in Fig. 18, the uplink transmission restriction subframe periodicity information indicates 20 and the uplink transmission restriction subframe offset information indicates 4. It is not possible to set the subframe number indicated by the uplink transmission restriction subframe offset information in excess of the period indicated by the uplink transmission restriction subframe periodicity information. Accordingly, the amount of uplink transmission restriction subframe offset information is changeable by the uplink transmission restriction subframe periodicity information.

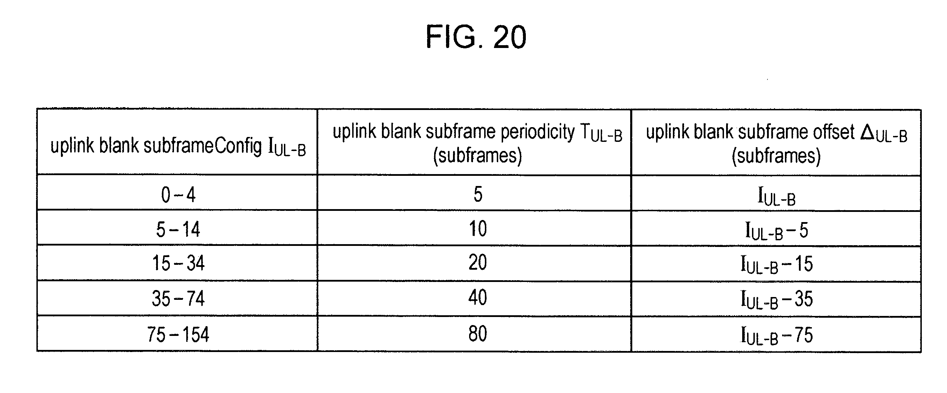

The uplink transmission restriction subframe offset information and uplink transmission restriction subframe periodicity information may be combined to form a single piece of uplink transmission restriction subframe configuration information, so that they can be efficiently supplied. Fig. 20 illustrates a table indicating the association of the values of uplink transmission restriction subframe offset information and uplink transmission restriction subframe periodicity information with the value of the uplink transmission restriction subframe configuration information. The uplink transmission restriction subframe configuration information is supplied to each terminal through RRC signaling. The terminal receives the uplink transmission restriction subframe configuration information and obtains the uplink transmission restriction subframe offset information and uplink transmission restriction subframe periodicity information by using the association table of Fig. 20. In this manner, by integrating the uplink transmission restriction subframe offset information and uplink transmission restriction subframe periodicity information into a single piece of uplink transmission restriction subframe configuration information, it is possible to suppress a change in the amount of uplink transmission restriction subframe offset information by the uplink transmission restriction subframe periodicity information. As a result, the uplink transmission restriction subframe offset information and uplink transmission restriction subframe periodicity information can be efficiently supplied.

A plurality of items of uplink transmission restriction subframe periodicity information and a plurality of items of uplink transmission restriction subframe offset information may be set in one terminal. For example, as shown in the example of the configuration in Fig. 19, two uplink transmission restriction subframes which are periodically allocated are set. In this manner, even in a case in which a subframe to which an uplink transmission restriction subframe would not be periodically allocated is set as an uplink transmission restriction subframe, uplink transmission restriction subframes can be flexibly set by the use of a plurality of items of uplink transmission restriction subframe periodicity information and a plurality of items of uplink transmission restriction subframe offset information.

By using the same item of uplink transmission restriction subframe periodicity information, it is possible to set a plurality of periodically allocated uplink transmission restriction subframes from this item of uplink transmission restriction subframe periodicity information and a plurality of items of uplink transmission restriction subframe offset information. For example, the uplink transmission restriction subframe offset information is formed in a bitmap format described in the first embodiment, which can be considered as a plurality of items of uplink transmission restriction subframe offset information. In this case, the setting of uplink transmission restriction subframes is not continuously repeated, and but is repeated after the lapse of the number of subframes indicated by the uplink transmission restriction subframe periodicity information. More specifically, if the uplink transmission restriction subframe offset information is formed as a bitmap having twenty bits and if the uplink transmission restriction subframe periodicity information indicates 40, the subframes of the subframe numbers 0 to 19 are respectively associated with the first through twentieth bits of the bitmap, and the subframes of the subframe numbers 20 to 39 are not associated with the bits of the bitmap, and then, the subframes of the subframe numbers 40 to 59 are respectively associated with the first through twentieth bits of the bitmap.

If the configuration of uplink transmission restriction subframes is changed, the base station re-supplies new uplink transmission restriction subframe configuration information or new uplink transmission restriction subframe periodicity information and new uplink transmission restriction subframe offset information to the terminal. The terminal overwrites the configuration of uplink transmission restriction subframes on the basis of the new uplink transmission restriction subframe periodicity information and the new uplink transmission restriction subframe offset information.

In this embodiment, when canceling the configuration of uplink transmission restriction subframes, the base station supplies uplink transmission restriction subframe periodicity information indicating the cancellation of the configuration of uplink transmission restriction subframes. The uplink transmission restriction subframe periodicity information indicating the cancellation of the configuration of uplink transmission restriction subframes indicates, for example, that the periodicity is 0. The terminal receives this uplink transmission restriction subframe periodicity information, and the subframe interpreter 404 identifies the uplink transmission restriction subframe periodicity information indicating that the cancellation of the configuration of uplink transmission restriction subframes. Then, the terminal resets the configuration of uplink transmission restriction subframes and identifies the subframes as the original radio frame configuration. Alternatively, when canceling the configuration of uplink transmission restriction subframes, the base station supplies uplink transmission restriction subframe offset information indicating the cancellation of the configuration of uplink transmission restriction subframes to the terminal. The uplink transmission restriction subframe offset information indicating the cancellation of the configuration of uplink transmission restriction subframes indicates, for example, that uplink transmission restriction subframes are not set in any frame, and if such information is formed in a bitmap format, all the bits of the bitmap are 0. The terminal receives this uplink transmission restriction subframe offset information, and the subframe interpreter 404 identifies the uplink transmission restriction subframe offset information indicating the cancellation of the configuration of uplink transmission restriction subframes. Then, the terminal resets the configuration of uplink transmission restriction subframes and identifies the subframes as the original radio frame configuration. Alternatively, when canceling the configuration of uplink transmission restriction subframes, the base station supplies uplink transmission restriction subframe configuration information indicating the cancellation of the configuration of uplink transmission restriction subframes to the terminal. The terminal receives this uplink transmission restriction subframe configuration information, and the subframe interpreter 404 identifies the uplink transmission restriction subframe configuration information indicating the cancellation of the configuration of uplink transmission restriction subframes. Then, the terminal resets the configuration of uplink transmission restriction subframes and identifies the subframes as original radio frame configuration.

The second embodiment of the present invention has been discussed.

### (Third Embodiment)

A third embodiment will be described below. In this embodiment, by supplying uplink transmission restriction subframe configuration information associated with a radio frame configuration, uplink transmission restriction subframes are set. Portions different from the first embodiment will be described below, and portions which will not be discussed below are the same as those of the first embodiment. The invention discussed in the third embodiment is also applicable to the second embodiment.

In many cases, inter-terminal interference occurs in a communication system environment in which the same subframe is used as an uplink subframe in one cell and is used as a downlink subframe in its adjacent cell and vice versa. That is, subframes which may cause inter-terminal interference are dependent on the configuration of subframes in a base station (reference base station, connecting base station, serving base station, and serving cell) and the configuration of subframes in a base station (adjacent base station, adjacent cell, interference base station, and interference cell) located in a cell adjacent to the cell of the reference base station. In this embodiment, an uplink transmission restriction subframe is set in association with a subframe which may be used as an uplink subframe in one cell and which may be used as a downlink subframe in it adjacent cell and vice versa.

Subframes which may cause interference when traffic adaptation is conducted by using flexible subframes are different from those when traffic adaptation is conducted by varying the uplink-downlink configuration. Accordingly, this embodiment will be described in the context of each traffic adaptation technique.

A description will first be given of a case in which traffic adaptation is conducted by using flexible subframes.

As an example in which traffic adaptation is conducted by using flexible subframes, the use of a radio frame configuration including flexible subframes shown in Fig. 8 is assumed. If this radio frame configuration is used in all cells, subframes in which uplink communication may be performed in one cell and downlink communication may be performed in its adjacent cell are subframe numbers 3, 4, 8, and 9, which have been set as flexible subframes. It is thus preferable that uplink transmission restriction subframes be set in the subframe numbers 3, 4, 8, and 9. Hereinafter, subframes which may cause inter-terminal interference are called uplink transmission restriction subframe candidates. In this case, flexible subframes are uplink transmission restriction subframe candidates.

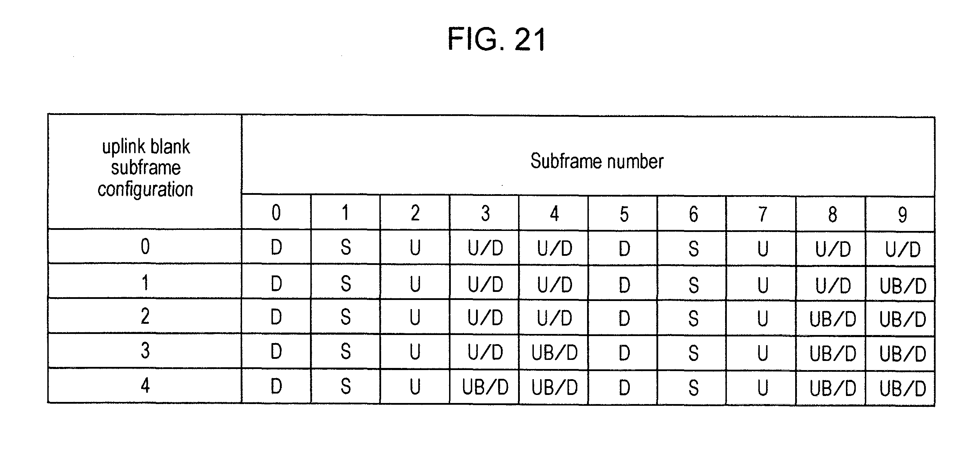

Fig. 21 illustrates an example of a table of radio frame configurations including uplink transmission restriction subframes which are set in association with flexible subframes. "UB/D" indicates subframes which may be switched between downlink subframes and uplink transmission restriction subframes by PDCCH signaling. Uplink transmission restriction subframe configuration information indicates the positions of flexible subframes and the positions of subframes which may be switched between downlink subframes and uplink transmission restriction subframes.

The base station adds information indicating the radio frame configuration including flexible subframes shown in Fig. 8 to the system information, and supplies the system information to terminals. In this manner, the base station sets the radio frame configuration, which is used as a base reference for terminals within the cell. Then, the base station individually supplies uplink transmission restriction subframe configuration information to each terminal through RRC signaling. The terminal identifies, by using this uplink transmission restriction subframe configuration information, subframes which may be switched between downlink subframes and uplink transmission restriction subframes in association with the radio frame configuration. Before the uplink transmission restriction subframe configuration information has been supplied, the terminal identifies the subframes as the original radio frame configuration without uplink transmission restriction subframes.

If the base station changes the configuration of uplink transmission restriction subframes, it supplies, through RRC signaling, new uplink transmission restriction subframe configuration information indicating the configuration of uplink transmission restriction subframes to a terminal which is connected to the base station. The terminal then overwrites the configuration of uplink transmission restriction subframes on the basis of the received new uplink transmission restriction subframe configuration information.

If the base station changes the radio frame configuration set by the base station, it supplies information concerning a new radio frame configuration to a terminal which is connected to the base station by including such information in system information or RRC signaling. The base station also supplies new uplink transmission restriction subframe configuration information which has reflected the new radio frame configuration to the terminal through RRC signaling. The terminal then receives the information concerning the new radio frame configuration, overwrites the radio frame configuration with the new radio frame configuration, and then resets the configuration of uplink transmission restriction subframes set in the terminal. That is, immediately after identifying the new radio frame configuration, the terminal identifies this radio frame configuration as a new radio frame configuration without uplink transmission restriction subframes. Then, on the basis of the received uplink transmission restriction subframe configuration information, the terminal positions uplink transmission restriction subframes in the terminal by using the subframe interpreter 404.

If the base station cancels the configuration of uplink transmission restriction subframes, it supplies uplink transmission restriction subframe configuration information indicating a radio frame configuration without uplink transmission restriction subframes to a terminal. As an example, in the radio frame configurations shown in Fig. 21, the base station sets the uplink transmission restriction subframe configuration information to 0, and then supplies the uplink transmission restriction subframe configuration information to the terminal.

A description will now be given of a case in which traffic adaptation is conducted by varying the uplink-downlink configuration.

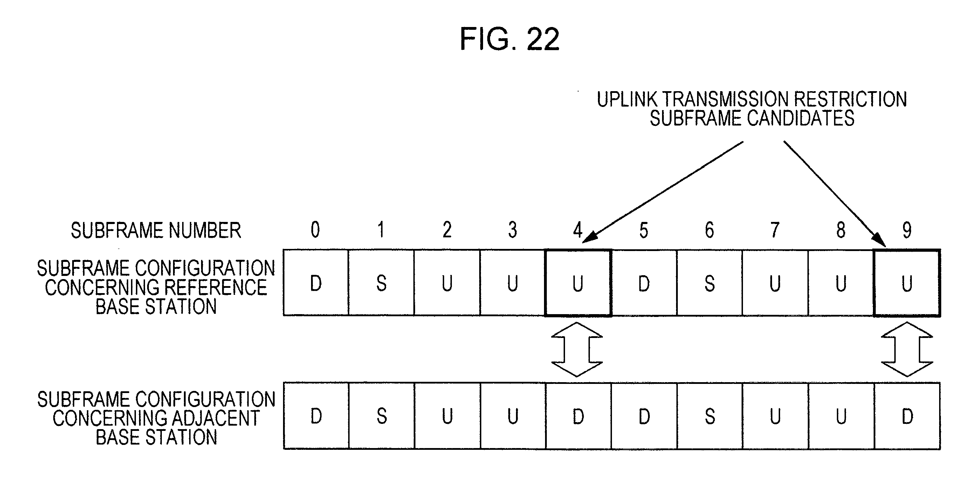

As an example in which traffic adaptation is conducted by varying the uplink-downlink configuration, the following case will be assumed. In the base station 101, which is assumed as a reference base station, the uplink-downlink configuration information is set to be 0, and in the base station 111, which is assumed as a base station adjacent to the base station 101, the uplink-downlink configuration information is set to be 1. Fig. 22 illustrates uplink transmission restriction subframe candidates when the uplink-downlink configuration information concerning the reference base station is set to be 0 and the uplink-downlink configuration information concerning the adjacent base station is set to be 1. If the uplink-downlink configuration information set by the base station 101 and that set by the base station 111 are known from the association table indicating uplink-downlink configuration information shown in Fig. 3, the base station 101 is able to identify that subframes used for uplink communication in the base station 101 and also used for downlink communication in the base station 111 are subframe numbers 4 and 9. That is, if the reference base station obtains uplink-downlink configuration information concerning the reference base station and that concerning the adjacent base station, it is able to identify uplink transmission restriction subframe candidates that may cause inter-terminal interference. In this embodiment, uplink transmission restriction subframes are set in association with the uplink-downlink configuration information concerning the reference base station and that concerning the adjacent base station.

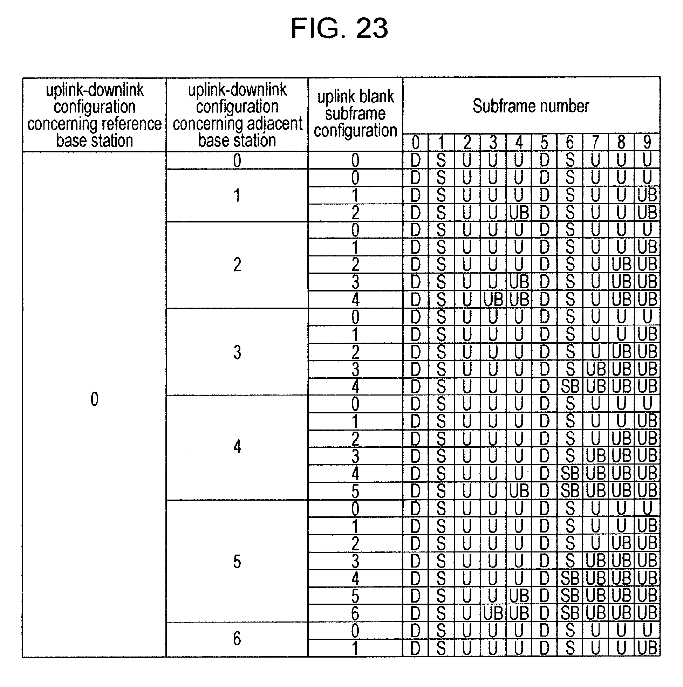

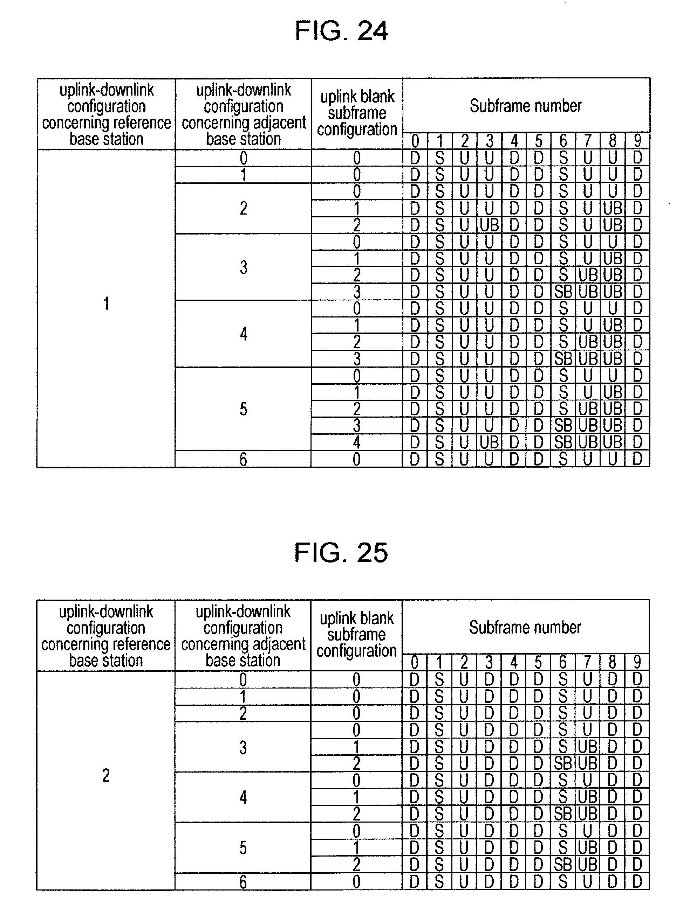

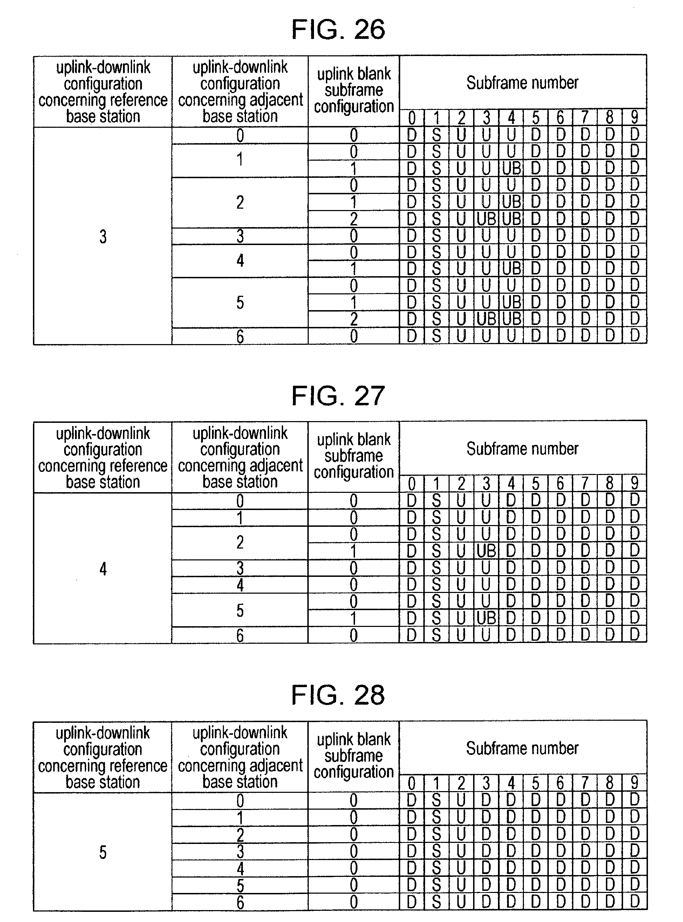

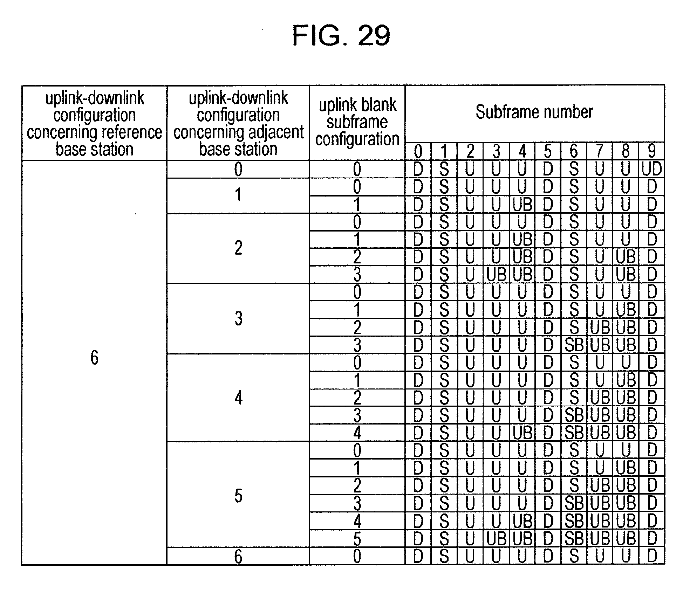

Figs. 23, 24, 25, 26, 27,28, and 29 illustrate examples of the configurations of uplink transmission restriction subframes in association with the uplink-downlink configuration information concerning the adjacent base station when the uplink-downlink configuration information concerning the reference base station are set to be 0, 1, 2, 3, 4, 5, and 6, respectively. Figs. 23, 24, 25, 26, 27, 28, and 29 illustrate enhanced radio frame configurations based on the table indicating the radio frame configurations using the uplink-downlink configuration information shown in Fig. 3, and also illustrate radio frame configurations including uplink transmission restriction subframes based on the uplink-downlink configuration information concerning the reference base station, the uplink-downlink configuration information concerning the adjacent base station, and the uplink transmission restriction subframe configuration information. Subframes that may cause inter-terminal interference, that is, uplink transmission restriction subframe candidates, are determined from the uplink-downlink configuration information concerning the reference base station and the uplink-downlink configuration information concerning the adjacent base station. Then, the radio frame configuration including uplink transmission restriction subframes are determined from the uplink transmission restriction subframe configuration information. By changing the uplink transmission restriction subframe configuration information, the proportion of subframes in which the transmission of an uplink signal is restricted can be changed.

For example, the base station 101 identifies the uplink-downlink configuration information set by the base station 101 and that set by the base station 111. The base stations 101 and 111 are connected to each other via the backhaul network 103, and the base station 101 obtains the uplink-downlink configuration information set by the base station 111 via the backhaul network 103. On the basis of the uplink-downlink configuration information set by the base station 101 and that set by the base station 111, the base station 101 sets the configuration of uplink transmission restriction subframes by using the association table shown in one of Fig. 23, 24, 25, 26, 27, 28, and 29, and supplies the uplink transmission restriction subframe configuration information to the terminal 102.

The base station supplies at least the uplink-downlink configuration information concerning the reference base station, the uplink-downlink configuration information concerning the adjacent base station, and the uplink transmission restriction subframe configuration information to a terminal. The uplink-downlink configuration information concerning the adjacent base station and uplink transmission restriction subframe configuration information are supplied to each terminal (individually) through RRC signaling. Before the uplink-downlink configuration information concerning the adjacent base station or uplink transmission restriction subframe configuration information is supplied, the terminal identifies the subframes as a radio frame configuration without uplink transmission restriction subframes.

If the reference base station changes the configuration of uplink transmission restriction subframes, it supplies, through RRC signaling, new uplink transmission restriction subframe configuration information indicating the configuration of the uplink transmission restriction subframes to the terminal which is connected to the reference base station. The terminal overwrites the configuration of the uplink transmission restriction subframes set in the terminal, on the basis of the received new uplink transmission restriction subframe configuration information.

If the reference base station changes the uplink-downlink configuration information set by the reference base station, it supplies new uplink-downlink configuration information concerning the reference base station to the terminal which is connected to the reference base station by including such information in the system information or RRC signaling. The reference base station also supplies new uplink transmission restriction subframe configuration information which has reflected the new uplink-downlink configuration information to the terminal through RRC signaling. The terminal then receives the uplink-downlink configuration information, identifies the new radio frame configuration, overwrites the radio frame configuration with the new radio frame configuration, and then resets the configuration of uplink transmission restriction subframes. That is, immediately after identifying the new radio frame configuration, the terminal identifies this radio frame configuration as a new radio frame configuration without uplink transmission restriction subframes. Then, on the basis of uplink-downlink configuration information set by the adjacent base station and the received uplink transmission restriction subframe configuration information, the terminal sets the configuration of uplink transmission restriction subframes in the terminal by using the subframe interpreter 404.

If the adjacent base station changes uplink-downlink configuration information set by the adjacent base station, it supplies new uplink-downlink configuration information set by the adjacent base station to the reference base station via a backhaul network. The reference base station determines new uplink transmission restriction subframe configuration information corresponding to the uplink-downlink configuration information set by the adjacent base station, and supplies, through RRC signaling, the uplink-downlink configuration information set by the adjacent base station and the new uplink transmission restriction subframe configuration information to the terminal which is connected to the reference base station. Then, the terminal performs processing in a manner similar to that when the uplink transmission restriction subframe configuration information is changed.

If the base station cancels the configuration of uplink transmission restriction subframes, it supplies uplink transmission restriction subframe configuration information indicating a radio frame configuration without uplink transmission restriction subframes to the terminal. As an example, in the radio frame configurations shown in Figs. 23, 24, 25, 26, 27, 28, and 29, the base station sets the uplink transmission restriction subframe configuration information to 0, and then supplies the uplink transmission restriction subframe configuration information to the terminal.

Alternatively, if the base station cancels the configuration of uplink transmission restriction subframes, it supplies the uplink-downlink configuration information before the configuration of uplink transmission restriction subframes is changed to the terminal as new uplink-downlink configuration information. The terminal overwrites the configuration of uplink transmission restriction subframes by using the new uplink-downlink configuration information so as to reset the uplink transmission restriction subframe configuration information. That is, the configuration of uplink transmission restriction subframes is reset without changing the radio frame configuration set in the terminal.

As described above, the reference base station sets the configuration of uplink transmission restriction subframes in association with uplink-downlink configuration information concerning the reference base station and that concerning one adjacent base station. However, there may be a case in which the reference base station has a plurality of adjacent base stations, such as the base station 111 shown in Fig. 1 is adjacent to the base station 101 and the RRH 121. In such a case, among the items of uplink-downlink configuration information concerning the adjacent base station indicated by the association tables shown in Figs. 23, 24, 25, 26, 27, 28, and 29, the item of uplink-downlink configuration information concerning the adjacent base station having the highest proportion of downlink subframes is applied.

For example, it is assumed that the uplink-downlink configuration information concerning the base station 101 is 0, the uplink-downlink configuration information set by the base station 111 is 1, and the uplink-downlink configuration information concerning the RRH 121 is 2. In this case, the base station 111 obtains the uplink-downlink configuration information concerning the base station 101 and that concerning the RRH 121 via the backhaul networks 103 and 113, respectively. Then, as a result of comparing the uplink-downlink configuration information concerning the base station 101 and that concerning the RRH 121 with each other, the base station 111 refers to the uplink-downlink configuration information concerning the RRH 121 which includes more downlink subframes as the uplink-downlink configuration of the adjacent base station. Then, the base station 111 determines the uplink transmission restriction subframe configuration information by using the configuration table shown in Fig. 23. The base station 111 supplies the uplink-downlink configuration information concerning the base station 111, uplink-downlink configuration information concerning the RRH 121, and the above-described uplink transmission restriction subframe configuration information to the terminal 112 which is connected to the base station 111. In a manner similar to the case in which the reference base station has only one adjacent base station, the terminal 112 sets the configuration of uplink transmission restriction subframes.

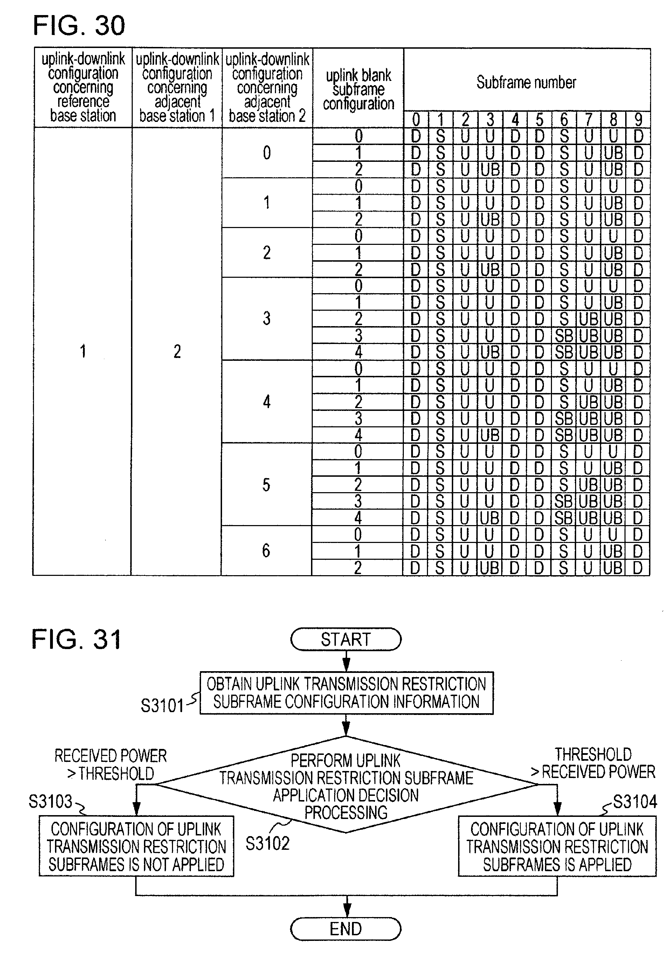

Alternatively, if there are a plurality of adjacent base stations, the communication system applies a table of radio frame configurations including uplink transmission restriction subframes in association with a plurality of adjacent base stations. For example, the base station 101, which is one adjacent base station of the base station 111, is set to be an adjacent base station 1, while the RRH 121, which is the other adjacent base station of the base station 111, is set to be an adjacent base station 2. Fig. 30 illustrates examples of radio frame configurations in association with the uplink-downlink configuration information concerning the adjacent base station 2 in a case in which the uplink-downlink configuration information concerning the reference base station is set to be 1 and the uplink-downlink configuration information concerning the adjacent base station 1 is set to be 2. The base station 111 obtains the uplink-downlink configuration information concerning the base station 101 and that concerning the RRH 121 via the backhaul networks 103 and 113, respectively. The base station 111 determines the uplink transmission restriction subframe configuration information by using the configuration table shown in Fig. 30. The base station 111 supplies the uplink-downlink configuration information concerning the base station 111, uplink-downlink configuration information concerning the base station 101, uplink-downlink configuration information concerning the RRH 121, and the above-described uplink transmission restriction subframe configuration information to the terminal 112 which is connected to the base station 111. The terminal 112 sets the configuration of uplink transmission restriction subframes by using the configuration table shown in Fig. 30, on the basis of the items of uplink-downlink configuration information concerning the base station 111, the base station 101, and the RRH 121, and the above-described uplink transmission restriction subframe configuration information.

If it is known to the base station and the terminal that the subframes of uplink transmission restriction subframe candidates are always set as uplink transmission restriction subframes, the base station supplies information concerning the uplink transmission restriction subframe candidates, and may omit the transmission of uplink transmission restriction subframe configuration information. In the case of the traffic adaptation technique using flexible subframes, the base station notifies the terminal of the positions of flexible subframes, and may omit the transmission of uplink transmission restriction subframe configuration information. In the case of the traffic adaptation technique conducted by varying the uplink-downlink configuration, the base station supplies uplink-downlink configuration information concerning the base station and that concerning an adjacent base station to the terminal, and may omit the transmission of uplink transmission restriction subframe configuration information.

The third embodiment of the present invention has been discussed. In this embodiment, the uplink transmission restriction subframe configuration information is indicated as numbers associated with uplink transmission restriction subframe numbers. However, the above-described uplink transmission restriction subframe configuration information and radio frame configuration are not restricted to those discussed in the third embodiment. For example, the uplink transmission restriction subframe configuration information may be a bitmap associated with subframes, which are uplink transmission restriction subframe candidates.

### (Fourth Embodiment)

A fourth embodiment will be described below. Portions different from the first through third embodiments will be discussed below, and portions which will not be discussed below are the same as those of the first through third embodiments.

In this embodiment, a base station includes uplink transmission restriction subframe configuration information in the system information and broadcasts the system information.

The terminal sets the configuration of uplink transmission restriction subframes by using the uplink transmission restriction subframe configuration information included in the system information transmitted from the base station. In this method, all terminals within the cell constructed by the base station apply the configuration of uplink transmission restriction subframes. If information concerning the configuration of uplink transmission restriction subframes and information concerning the radio frame configuration are included in the same system information, the base station may include the information concerning the radio frame configuration including uplink transmission restriction subframes in the system information and then broadcast the system information.

Alternatively, the terminal sets the configuration of uplink transmission restriction subframes by using the uplink transmission restriction subframe configuration information included in the system information and by performing uplink transmission restriction subframe application decision processing. In this method, as a result of the above-described terminal performing the uplink transmission restriction subframe application decision processing, it is possible to apply the configuration of uplink transmission restriction subframes to a predetermined terminal while the system information is being used. For example, the communication system does not apply uplink transmission restriction subframes to a terminal to which the configuration of uplink transmission restriction subframes is not applied, such as the terminal 102-B located at the center of the cell, by performing the above-described uplink transmission restriction subframe application decision processing. On the other hand, the communication system applies uplink transmission restriction subframes to the terminal 102-A, which is highly likely to cause inter-terminal interference, by performing the above-described uplink transmission restriction subframe application decision processing. The condition used for the uplink transmission restriction subframe application decision processing is reported from the base station to the terminals through the higher layer.

The uplink transmission restriction subframe application decision processing is performed by the subframe interpreter 404. Fig. 31 is a flowchart illustrating uplink transmission restriction subframe application decision processing to be performed when uplink transmission restriction subframe configuration information included in the system information is received. The terminal receives system information from the base station to which the terminal is connecting so as to obtain uplink transmission restriction subframe configuration information (step S3101). Then, the terminal performs uplink transmission restriction subframe application decision processing (step S3102). In the uplink transmission restriction subframe application decision processing, the terminal decides whether or not to cancel or restrict the transmission of an uplink signal in a subframe indicated by the uplink transmission restriction subframe configuration information. For example, as the condition used in the uplink transmission restriction subframe application decision processing, the terminal compares the received power of a downlink signal for a transmission signal from the base station connecting to the terminal with a threshold. The received power of a downlink signal is, for example, the received power of a downlink reference signal (RSRP; Reference Signal Received Power). If the received power is higher than the threshold (step S3102; received power > threshold), the terminal determines that it is located at the center of the cell, and does not set uplink transmission restriction subframes for any of the subframes (step S3103). On the other hand, if the received power is lower than the threshold (step S3102; threshold > received power), the terminal determines that it is located at the cell edge, and applies the uplink transmission restriction subframes by using the obtained uplink transmission restriction subframe configuration information (step S3104).

In the uplink transmission restriction subframe application decision processing performed by the terminal, instead of the received power of a downlink signal for a transmission signal from the base station to which the terminal is connecting, the received quality of a downlink signal and a threshold for the received quality may be utilized. The received quality of a downlink signal is, for example, the received quality of a downlink reference signal (RSRQ; Reference Signal Received Quality).

If, in the uplink transmission restriction subframe application decision processing, a decision is made by using the received power of a downlink signal for a transmission signal from an adjacent base station and a threshold for the received power, the precision in determining whether or not the terminal is located at the cell edge is improved. In this case, if the received power of a downlink signal from the adjacent base station is higher than the threshold used for this received power, the terminal determines that it is located near the boundary between the cell constructed by the base station to which the terminal is connecting and the cell constructed by the adjacent base station. On the other hand, if the received power of a downlink signal from the adjacent base station is lower than the threshold used for this received power, the terminal determines that it is located at a position outside of the vicinity of the boundary. The threshold used for determining whether or not the terminal is located at the cell edge is obtained from the base station in advance.

The base station may supply a plurality of items of uplink transmission restriction subframe configuration information. Then, the terminal may select an item of uplink transmission restriction subframe configuration information suitable for the terminal as a result of performing the uplink transmission restriction subframe application decision processing. In this case, the terminal at least requires decision conditions one less than the number of items of uplink transmission restriction subframe configuration information. The base station notifies the terminal of the plurality of conditions for the uplink transmission restriction subframe application decision processing through the higher layer.

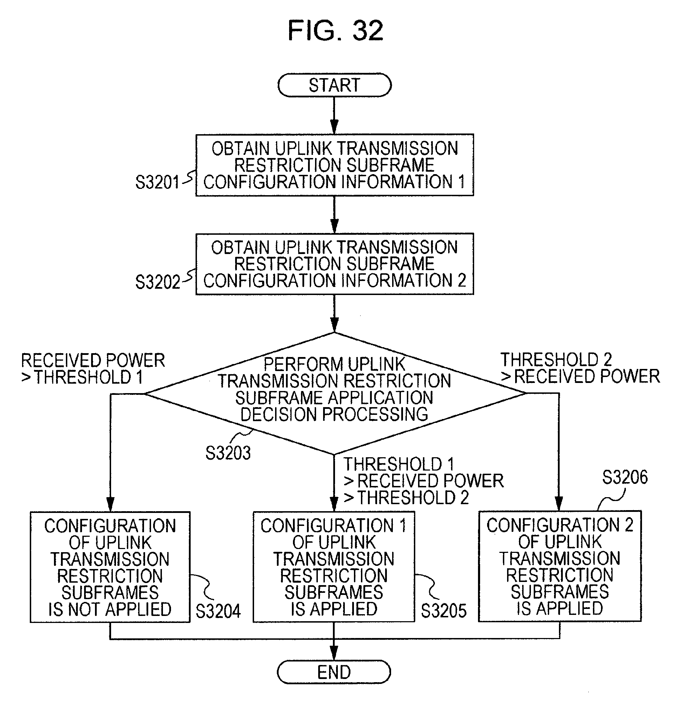

Fig. 32 is a flowchart illustrating uplink transmission restriction subframe application decision processing when two items of uplink transmission restriction subframe configuration information are received. The terminal obtains from the base station in advance a threshold 1 and a threshold 2 as the conditions for the uplink transmission restriction subframe application decision processing. The terminal receives system information from the base station to which the terminal is connecting so as to obtain uplink transmission restriction subframe configuration information 1 and uplink transmission restriction subframe configuration information 2 (steps S3201 and S3202). Then, the terminal performs the uplink transmission restriction subframe application decision processing (step S3203). In the uplink transmission restriction subframe application decision processing, for example, the terminal compares the received power of a downlink signal for a transmission signal from the base station with the threshold 1 and the threshold 2. If the received power is higher than the threshold 1 (step S3203; received power > threshold 1), uplink transmission restriction subframes are not set in any of the subframes (step S3204). If the received power is lower than the threshold 1 and is higher than the threshold 2 (step S3203; threshold 1 > received power > threshold 2), uplink transmission restriction subframes are applied by using the obtained uplink transmission restriction subframe configuration information 1 (step S3205). If the received power is lower than the threshold 2 (step S3203; threshold 2 > received power), uplink transmission restriction subframes are applied by using the obtained uplink transmission restriction subframe configuration information 2 (step S3206).

The terminal performs the above-described uplink transmission restriction subframe application decision processing when uplink transmission restriction subframe configuration information is received. Before the uplink transmission restriction subframe application decision processing is performed, the above-described received power has been calculated in the terminal and stored as information indicating the received power in the terminal. When performing the uplink transmission restriction subframe application decision processing, the terminal uses the stored information indicating the received power.

Alternatively, the terminal performs the uplink transmission restriction subframe application decision processing when the received power of a downlink signal is calculated. Before the uplink transmission restriction subframe application decision processing is performed, the uplink transmission restriction subframe configuration information has been received by the terminal and stored in the terminal. When performing the uplink transmission restriction subframe application decision processing, the terminal uses the uplink transmission restriction subframe configuration information.

Alternatively, the terminal performs the uplink transmission restriction subframe application decision processing on a regular basis. The terminal receives system information including uplink transmission restriction subframe configuration information and information indicating the periodicity in which the uplink transmission restriction subframe application decision processing is performed, and then stores the uplink transmission restriction subframe configuration information. The terminal identifies the timing at which the uplink transmission restriction subframe application decision processing is performed from the received information indicating the periodicity in which the uplink transmission restriction subframe application decision processing is performed, and performs the uplink transmission restriction subframe application decision processing in accordance with the identified timing. The terminal performs the uplink transmission restriction subframe application decision processing by using the stored uplink transmission restriction subframe configuration information and the received power. The intervals at which the uplink transmission restriction subframe application decision processing is performed are preferably equal to or longer than the intervals at which the received power is calculated. The periodicity information indicating the periodicity in which the uplink transmission restriction subframe application decision processing is performed is supplied from the base station to the terminal through the higher layer.

If the base station changes the configuration of uplink transmission restriction subframes, it broadcasts system information to the terminal by including new uplink transmission restriction subframe configuration information in the system information. The terminal identifies the new uplink transmission restriction subframe configuration information from the received system information, and overwrites the configuration of uplink transmission restriction subframes with the new configuration of uplink transmission restriction subframes after performing the uplink transmission restriction subframe application decision processing.

If the base station cancels the configuration of uplink transmission restriction subframes, it broadcasts system information to the terminal by including uplink transmission restriction subframe configuration information indicating the cancellation of the configuration of uplink transmission restriction subframes in the system information. The terminal identifies the cancellation of the configuration of uplink transmission restriction subframes from the received system information. The terminal then resets the configuration of uplink transmission restriction subframes after performing the uplink transmission restriction subframe application decision processing, and identifies the subframes as the original radio frame configuration. Alternatively, if the base station cancels the configuration of uplink transmission restriction subframes, it notifies the terminal of the condition for the uplink transmission restriction subframe application decision processing indicating that uplink transmission restriction subframes are not applicable in any case. Then, the terminal does not set uplink transmission restriction subframes as a result of performing the uplink transmission restriction subframe application decision processing, and identifies the subframes as the original radio frame configuration.

In this embodiment, the configuration of uplink transmission restriction subframe configuration information is not restricted, and the uplink transmission restriction subframe configuration information may be formed by using a bitmap format, information concerning the configuration of uplink transmission restriction subframes associated with uplink transmission restriction subframe candidates, or uplink transmission restriction subframe periodicity information which have been described in the foregoing embodiments, or another item of information suitable for reporting the configuration of uplink transmission restriction subframes.

The fourth embodiment of the present invention has been discussed.

### (Fifth Embodiment)

A fifth embodiment will be described below. Portions different from the first through fourth embodiments will be described below, and portions which will not be discussed below are the same as those of the first through fourth embodiments.

In the first through fourth embodiments, a description has been given, assuming that uplink transmission restriction subframe configuration information is supplied by including it in RRC signaling or system information. If uplink transmission restriction subframe configuration information is supplied through RRC signaling or system information, it means that the intervals at which the configuration of uplink transmission restriction subframes is updated is longer than the intervals at which a resource is applied to an uplink signal.

In this embodiment, the base station individually supplies the uplink transmission restriction subframe configuration information to each terminal through PDCCH signaling. That is, the uplink transmission restriction subframe configuration information is included in an uplink grant and is supplied to a terminal. In this embodiment, it is possible to supply the uplink transmission restriction subframe configuration information at intervals equal to or shorter than the intervals at which a resource is applied to an uplink signal.

For example, the base station 101 transmits an uplink grant to the terminal 102 and requests the terminal 102 to transmit an uplink data channel in a subframe four subframes subsequent to the subframe in which the uplink grant is transmitted. Meanwhile, the base station 111 allocates the subframe in which the terminal 102 is scheduled to transmit the uplink data channel to the transmission of a downlink data channel to the terminal 112. In this case, for avoiding inter-terminal interference, the base station 111 requests the base station 101 to restrict the transmission of an uplink data channel through the backhaul network 103. The base station 101 sends a request (uplink signal transmission restriction request and uplink transmission restriction subframe configuration information) to restrict the transmission of the uplink data channel to the terminal 102 during the period from when the base station 101 has transmitted the uplink grant until when the terminal 102 will transmit the uplink data channel. Then, the terminal 102 receives the uplink signal transmission restriction request and cancels or restricts the transmission of the uplink data channel. With this operation, it is possible to send a request to restrict the transmission of an uplink signal at intervals shorter than the intervals at which radio resource scheduling is performed. Thus, efficient communication can be performed by avoiding inter-terminal interference.

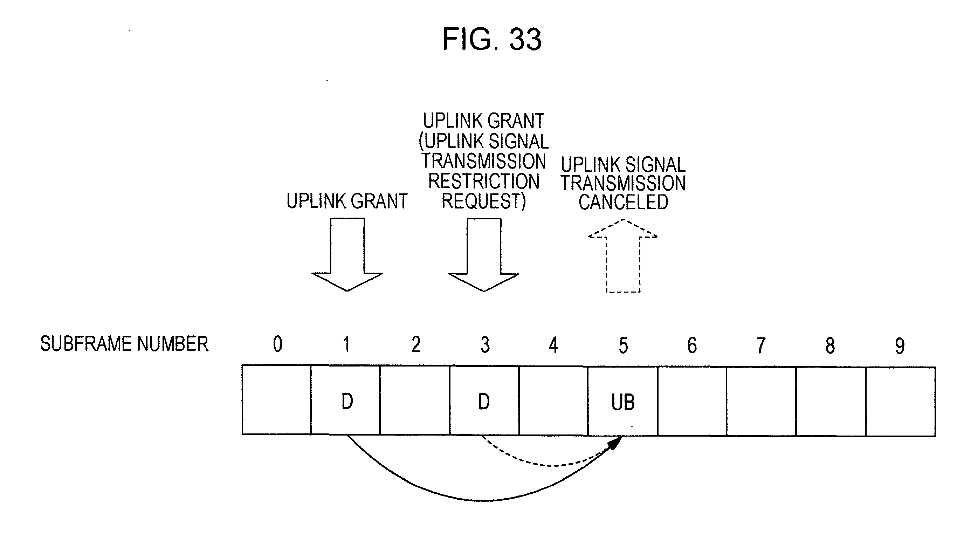

In this embodiment, the configuration of uplink transmission restriction subframes can be set more dynamically. Accordingly, an uplink signal, such as an uplink data channel, to be transmitted in the first transmission, to which a resource is allocated, is also effectively restricted. Fig. 33 illustrates an example of the sending of a request to restrict the transmission of an uplink signal in this embodiment. In Fig. 33, by using the downlink subframe of the subframe number 1, the base station 101 transmits an uplink grant which requests the terminal 102 to transmit an uplink signal in the subframe of the subframe number 5. However, after transmitting this uplink grant, if the base station 101 receives a request to restrict the transmission of the uplink signal using the subframe of the subframe number 5 from the base station 112, it transmits an uplink grant including uplink transmission restriction subframe configuration information to the terminal 102 by using the subframe of the subframe number 3, which is a downlink subframe prior to the subframe number 5. The terminal 102 obtains the uplink grant in the subframe of the subframe number 1 and starts preparations for transmitting an uplink signal. However, in the subframe of the subframe number 3, the terminal 102 obtains the uplink grant including a request to restrict the transmission of an uplink signal. Accordingly, the terminal 102 performs transmission processing for the uplink signal in the subframe of the subframe number 5 so as not to cause interference which may influence the terminal 112. As this transmission processing, the uplink signal transmission processing discussed in the first embodiment may be performed. In this example, processing for canceling the transmission of the uplink signal is performed in accordance with first uplink transmission signal processing.

The uplink transmission restriction subframe configuration information used in this embodiment is supplied through PDCCH signaling. Accordingly, it is preferable that the uplink transmission restriction subframe configuration information be supplied with a small amount of information.

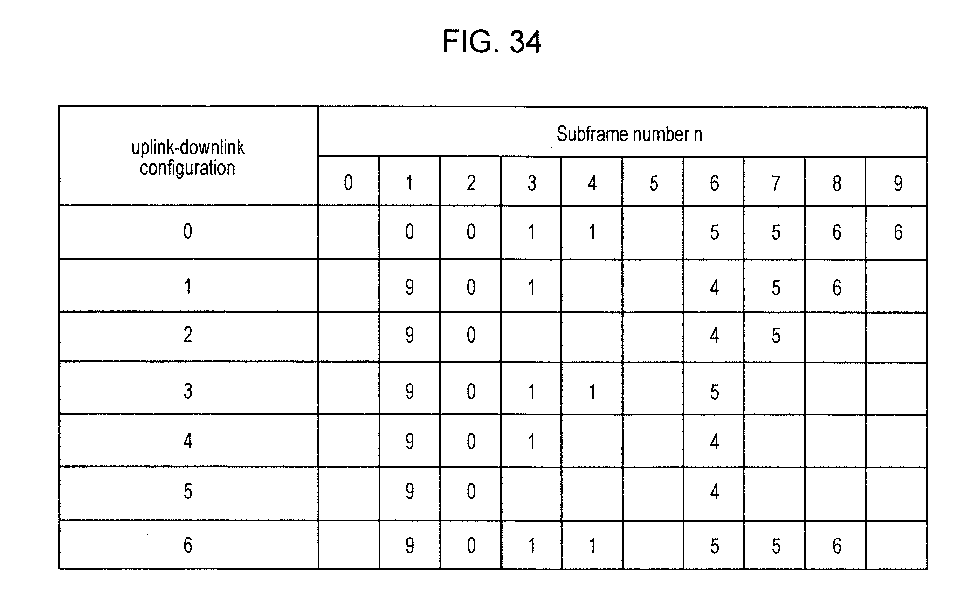

The uplink transmission restriction subframe configuration information used in this embodiment is, for example, a one-bit restriction request. In this configuration information, downlink subframes in which an uplink grant including a one-bit uplink signal transmission restriction request is received and uplink transmission restriction subframes in which the transmission of an uplink signal is restricted are associated with each other in advance. Fig. 34 illustrates an association table indicating the association between downlink subframes in which an uplink grant including an uplink signal transmission restriction request is received and uplink transmission restriction subframes. The numbers in the table of Fig. 34 represent the downlink subframe numbers of the downlink subframes in which an uplink signal transmission restriction request will be received in association with the subframes of the uplink subframe numbers and special subframe numbers. For example, if the uplink-downlink configuration information is 0, for restricting the transmission of an uplink signal to which the uplink subframe of the subframe number 2 is allocated, the base station transmits an uplink grant including a one-bit uplink signal transmission restriction request in the subframe of the subframe number 0. For restricting the transmission of an uplink signal to which the uplink subframe of the subframe number 4 is allocated, the base station transmits an uplink grant including a one-bit uplink signal transmission restriction request in the subframe of the subframe number 1. The terminal recognizes an uplink transmission restriction subframe from the uplink grant including a one-bit uplink signal transmission restriction request, by using the association table, such as that shown in Fig. 34, so as to identify the subframe number which is set as the uplink transmission restriction subframe.

If the number of downlink subframes is smaller than that of uplink subframes, an uplink grant including an uplink signal transmission restriction request is associated with a plurality of uplink subframes. For example, if the uplink-downlink configuration information is 0, the downlink subframe of the subframe number 1 is associated with the uplink subframe of the subframe number 3 and the uplink subframe of the subframe number 4, and the downlink subframe of the subframe number 6 is associated with the uplink subframe of the subframe number 8 and the uplink subframe of the subframe number 9. By associating an uplink signal with an uplink grant, it is possible to supply uplink transmission restriction subframe configuration information with a smaller amount of information than to supply uplink transmission restriction subframe configuration information using subframe numbers.

Alternatively, as the uplink transmission restriction subframe configuration information in this embodiment, subframe numbers may be used. For example, if it is not possible to associate subframes in which an uplink grant is received with uplink transmission restriction subframes in a one-to-one correspondence, due to a case, for example, in which the number of downlink subframes is smaller than that of uplink subframes, the uplink transmission restriction subframe configuration information indicating subframe numbers is effective because the subframe numbers can be directly reported. The terminal then identifies uplink transmission restriction subframes from the uplink grant including the subframe numbers specified as uplink transmission restriction subframes. The subframe number may be a relative number starting from the subframe number when the uplink grant was received, or an absolute number constituted by a radio frame number and a subframe number.

Alternatively, as the uplink transmission restriction subframe configuration information in this embodiment, numbers associated with uplink signals may be used. For example, this type of uplink transmission restriction subframe configuration information is effective when the transmission of an uplink signal is individually restricted, such as a case in which the transmission of a specific uplink data channel is canceled, while the transmission of a specific uplink control channel is maintained. As the numbers associated with uplink signals, if uplink signals are uplink data channels, HARQ process numbers may be used, and if uplink signals are other than uplink data channels, new numbers associated with the uplink signals may be created and used.

A plurality of items of the above-described uplink transmission restriction subframe configuration information may be set at the same time. For example, by setting a subframe number and a number associated with data to be transmitted by an uplink signal at the same time, the base station is able to instruct the terminal to cancel the transmission of a specified uplink signal which is scheduled to be transmitted in a specified uplink subframe.

The fifth embodiment of the present invention has been discussed.

### (Sixth Embodiment)

A sixth embodiment will be described below. Portions different from the first through fifth embodiments will be described below, and portions which will not be discussed below are the same as those of the first through fifth embodiments.

In the first through fifth embodiments, an uplink transmission restriction subframe is set for avoiding inter-cell interference which may occur if an uplink subframe is set in one cell and a downlink subframe is set in its adjacent cell at the same time. An uplink transmission restriction subframe of the present invention is also effective for inter-cell interference caused by uplink signals.

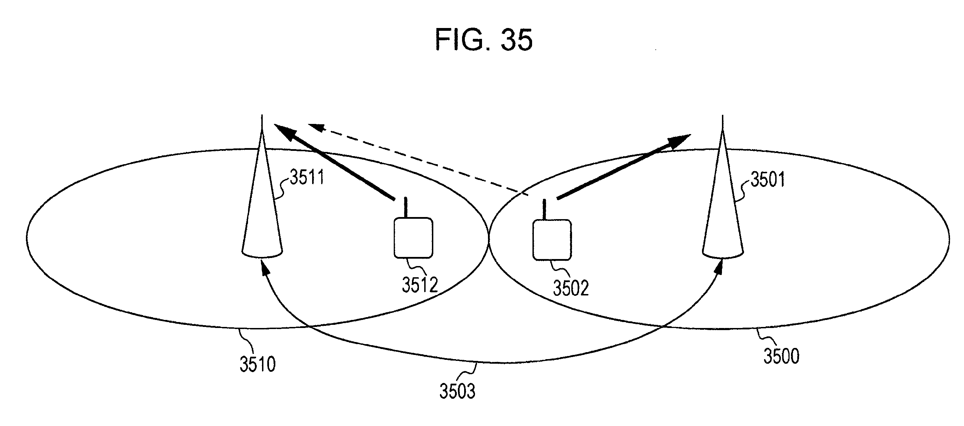

Fig. 35 schematically illustrates a communication system in which adjacent cells are performing uplink communication. A base station 3501 is performing uplink communication with a terminal 3502, and at the same time, a base station 3511 is performing uplink communication with a terminal 3512. As shown in Fig. 35, an uplink signal transmitted from the terminal 3502 located at the edge of a cell 3500 to the base station 3501 leaks to the base station 3511 which constructs a cell 3510 adjacent to the cell 3500, and causes interference which may influence an uplink signal transmitted from the terminal 3512 to the base station 3511. The above-described inter-cell interference caused by uplink signals may also be avoided as a result of the terminal 3502 or the terminal 3512 canceling or restricting the transmission of an uplink signal.

In this embodiment, a base station sets the configuration of uplink transmission restriction subframes in association with uplink subframes set by an adjacent base station. It is thus possible to supply information concerning the configuration of uplink transmission restriction subframes to a terminal with a small amount of information.

In this embodiment, as a method for reporting uplink transmission restriction subframes and for setting the configuration thereof, processing for setting the configuration of uplink transmission restriction subframes by a base station and a terminal, and a method for processing an uplink signal in an uplink transmission restriction subframe, the methods described in the foregoing embodiments are employed. In this manner, the present invention serves as effective means also for avoiding inter-cell interference caused by uplink communication in the TDD scheme and the FDD scheme.

The sixth embodiment of the present invention has been discussed.

### (Seventh Embodiment)

A seventh embodiment will be described below. Portions different from the first through sixth embodiments will be described below, and portions which will not be discussed below are the same as those of the first through sixth embodiments.

The present invention is also effective in a case in which communication is performed between terminals without a base station or a backhaul network therebetween (terminal-to-terminal communication; Device to device communication).

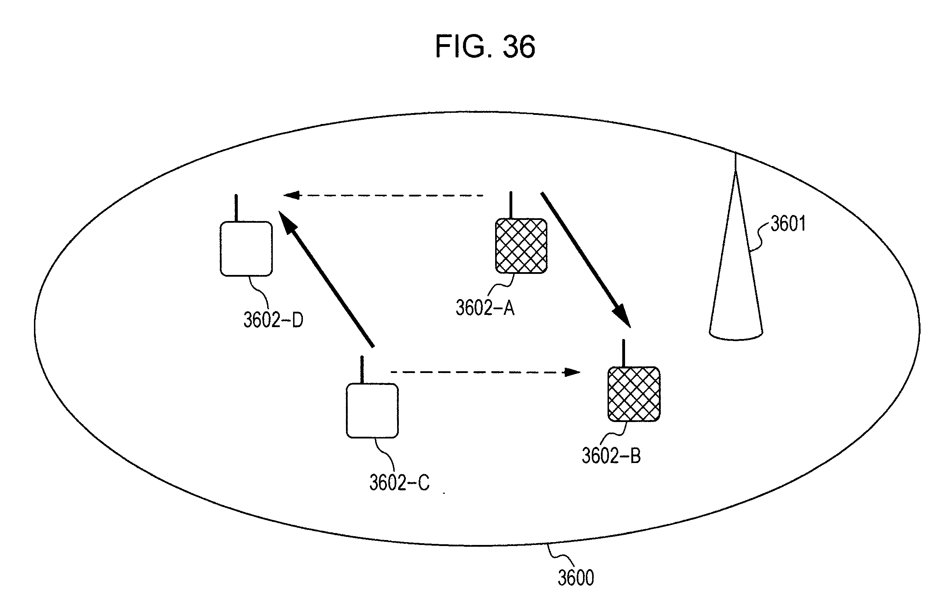

Fig. 36 schematically illustrates a communication system in which terminal-to-terminal communication is performed according to this embodiment. A terminal 3602-A transmits a signal to a terminal 3602-B, and the terminal 3602-B receives the signal transmitted from the terminal 3602-A. The terminals 3602-A and 3602-B directly perform communication without a base station therebetween. A terminal 3602-C transmits a signal to a terminal 3602-D, and the terminal 3602-D receives the signal transmitted from the terminal 3602-C. The terminals 3602-C and 3602-D directly perform communication without a base station therebetween, in a manner similar to the terminals 3602-A and 3602-B. If resource blocks and subframes used in terminal-to-terminal communication between the terminals 3602-A and 3602-B are the same as those used in terminal-to-terminal communication between the terminals 3602-C and 3602-D, the signal transmitted from the terminal 3602-A leaks to the reception unit of the terminal 3602-D and causes interference in the terminal 3602-D. That is, in a communication system in which terminal-to-terminal communication is performed, inter-terminal interference may also occur.

In this embodiment, too, the configuration of uplink transmission restriction subframes is individually set in each terminal so as to restrict the transmission of a signal in a terminal, thereby suppressing the occurrence of inter-terminal interference. The base station 3601 notifies the terminal 3602 of uplink transmission restriction subframes. In this case, the configuration of uplink transmission restriction subframes is set in each terminal so as to reduce inter-terminal interference. For example, the different configurations of uplink transmission restriction subframes are set for terminal-to-terminal communication between the terminals 3602-A and 3602-B and for that between the terminals 3602-C and 3602-D. With this arrangement, the terminal 3602-A is unable to transmit a signal in a subframe in which the terminal 3602-D is performing reception processing. The terminal 3602-C is unable to transmit a signal in a subframe in which the terminal 3602-A transmits a signal.

In this manner, the present invention serves as effective means also for avoiding inter-terminal interference in a communication system in which terminal-to-terminal communication is performed.

The seventh embodiment of the present invention has been discussed.

In the present invention, similar advantages are obtained when the above-described NCT is used instead of known component carriers.

A program operated in the base stations 101, 111, 3501, 3511, and 3601, the RRH 121, and the terminals 102, 112, 122, 3502, 3512, and 3602 according to the present invention is a program which controls a CPU, etc. so that the functions of the above-described embodiments of the present invention can be implemented (program which causes a computer to function). Then, information handled in these devices is temporarily stored in a RAM when being processed, and is then stored in various ROMs or an HDD. The information is read by the CPU when necessary and is updated or overwritten. As a recording medium which records the program, any one of the following types of recording media, such as a semiconductor medium (for example, a ROM or a non-volatile memory card), an optical recording medium (for example, a DVD, an MO, an MD, a CD, or a BD), and a magnetic recording medium (for example, magnetic tape or a flexible disk), may be used. The functions of the above-described embodiments are implemented by operating a loaded program. Alternatively, the functions of the present invention may also be implemented by executing processing together with an operating system or another application program on the basis of instructions of the loaded program.

If the above-described program is put onto the market, it may be recorded on a portable recording medium and be distributed, or may be transferred to a server computer connected to the above-described devices via a network, such as the Internet. In this case, a storage device of the server computer is included in the present invention. Moreover, all or some of the base stations 101, 111, 3501, 3511, and 3601, the RRH 121, and the terminals 102, 112, 122, 3502, 3512, and 3602 of the above-described embodiments may be typically implemented by an LSI, which is an integrated circuit. The functional blocks of the base stations 101, 111, 3501, 3511, and 3601, the RRH 121, and the terminals 102, 112, 122, 3502, 3512, and 3602 may be individually formed into chips or all or some of the functional blocks may be integrated into a chip. In this case, the base stations 101, 111, 3501, 3511, and 3601, the RRH 121, and the terminals 102, 112, 122, 3502, 3512, and 3602, or the functions thereof do not necessarily have to be integrated into an LSI, but they may be implemented by a dedicated circuit or a general-purpose processor. Moreover, due to the progress of semiconductor technologies, if a circuit integration technology which replaces an LSI technology is developed, an integrated circuit formed by such a technology may be used.

While the embodiments of the present invention have been described in detail with reference to the drawings, it is to be understood that specific configurations are not limited to the disclosed embodiments, and design changes, for example, within the spirit of this invention are included in the present invention. For example, design changes which reverse the order of some of processing operations may be performed. In the present invention, various modifications may be made within the scope of the claims. Embodiments obtained by suitably combining the technical means disclosed in the different embodiments are also included within the technical scope of the present invention. Among the elements described in the embodiments, elements that offer similar advantages may be replaced by each other.

The invention of this application is not restricted to the above-described embodiments. The terminals disclosed in the invention of this application are not restricted to the application to mobile station devices, and may be applicable to stationary electronic devices or non-portable electronic devices installed indoors or outdoors, such as AV machines, kitchen equipment, vacuum cleaners, washing machines, air conditioners, office equipment, vending machines, and other household appliances.

### INDUSTRIAL APPLICABILITY

The present invention may be suitably used in a base station, a terminal, a communication system, and a communication method.

### DESCRIPTION OF REFERENCE NUMERALS

- 100, 110, 120, 3500, 3510, 3600, 3700, 3710: cell
- 101, 111, 3501, 3511, 3601, 3701: base station
- 121, 3711: RRH
- 102, 112, 122, 3502, 3512, 3602, 3702, 3712: terminal
- 103, 113, 3503, 3703: backhaul network
- 400, 520, 600, 720: higher layer
- 401, 721: terminal information data processing
- 402, 522, 602, 722: RRC layer processor
- 403, 523, 603, 723: MAC layer processor
- 404, 724: subframe interpreter
- 405, 725: scheduling information interpreter
- 410: uplink transmission unit
- 411: uplink data channel generator
- 412: uplink control channel generator
- 413: uplink reference signal generator
- 414: uplink transmission signal processor
- 415: uplink radio transmission section
- 420: terminal transmit antenna unit
- 430: uplink signal processing method determining unit
- 500: base-station receive antenna unit
- 510: uplink reception unit
- 511: uplink radio reception unit
- 512: uplink reception signal processor
- 513: uplink channel estimating unit
- 514: uplink data channel processor
- 515: uplink control channel processor
- 521, 601: base-station information data processing
- 524, 604: subframe configuration unit
- 525, 605: scheduling information determining unit
- 610: downlink transmission unit
- 611: downlink data channel generator
- 612: downlink control channel generator
- 613: downlink reference signal generator
- 614: downlink transmission signal processor
- 615: downlink radio transmission section
- 620: base-station transmit antenna unit
- 700: terminal receive antenna unit
- 710: downlink reception unit
- 711: downlink radio reception unit
- 712: downlink reception signal processor
- 713: downlink channel estimating unit
- 714: downlink control channel processor
- 715: downlink data channel processor

## Claims

1. A terminal device which communicates with a base station device, comprising:
a generation unit that generates an uplink physical channel or an uplink reference signal;
a transmission unit that transmits the uplink physical channel or the uplink reference signal; and
a reception unit that receives downlink control information and a RRC message including uplink/downlink configuration information,
wherein the transmission unit transmits the uplink physical channel or the uplink reference signal in a subframe which is specified as an uplink subframe by the downlink control information among subframes specified as uplink subframes by the uplink/downlink configuration information.

2. The terminal device according to Claim 1, wherein the transmission unit does not transmit the uplink physical channel or the uplink reference signal in a subframe which is not specified as an uplink subframe by the downlink control information among subframes specified as uplink subframes by the uplink/downlink configuration information.

3. The terminal device according to Claim 1, wherein the uplink physical channel is a PUSCH.

4. The terminal device according to Claim 1, wherein the uplink physical channel is a PUCCH.

5. The terminal device according to Claim 1, wherein the uplink reference signal is a SRS.

6. A base station device which communicates with a terminal device, comprising:
a reception unit that receives an uplink physical channel or an uplink reference signal transmitted from the terminal device; and
a transmission unit that transmits downlink control information and a RRC message including uplink/downlink configuration information to the terminal device,
wherein the reception unit receives the uplink physical channel or the uplink reference signal in a subframe which is specified as an uplink subframe by the downlink control information among subframes specified as uplink subframes by the uplink/downlink configuration information.

7. The base station device according to Claim 6, wherein the reception unit does not receive the uplink physical channel or the uplink reference signal in a subframe which is not specified as an uplink subframe by the downlink control information among subframes specified as uplink subframes by the uplink/downlink configuration information.

8. The base station device according to Claim 6, wherein the base station device supplies information indicating subframes specified by the downlink control information to a different base station device via a backhaul.

9. The base station device according to Claim 6, wherein the uplink physical channel is a PUSCH.

10. The base station device according to Claim 6, wherein the uplink physical channel is a PUCCH.

11. The base station device according to Claim 6, wherein the uplink reference signal is a SRS.
